# EUROPEAN PATENT APPLICATION

(11) **EP 4 425 613 A1**
(43) Date of publication of application: **04.09.2024**
(21) Application number: 22943042.6
(22) Date of filing: 24.05.2022
(51) Int. Cl.: H01M 4/58, H01M 10/0525

(54) **POSITIVE ELECTRODE ACTIVE MATERIAL, POSITIVE ELECTRODE SHEET, SECONDARY BATTERY, BATTERY MODULE, BATTERY PACK, AND ELECTRICAL APPARATUS**

(71) Applicant: Contemporary Amperex Technology Co., Limited, Ningde, Fujian 352100 (CN)
(72) Inventor: YUAN, Tianci, Ningde, Fujian 352100 (CN); JIANG, Yao, Ningde, Fujian 352100 (CN); ZHANG, Xinxin, Ningde, Fujian 352100 (CN); OUYANG, Chuying, Ningde, Fujian 352100 (CN); WU, Lingjing, Ningde, Fujian 352100 (CN); CHEN, Shangdong, Ningde, Fujian 352100 (CN); KANG, Weibin, Ningde, Fujian 352100 (CN)
(74) Representative: Gong, Jinping
(86) International application number: PCT/CN2022/094620
(87) International publication number: WO 2023/225836

(57) **Abstract**

A positive electrode active material includes a core and a shell enveloping the core. The core contains Li₁₊ₓMn_{1-y}A_{y}P_{1-z}R_{z}O₄, where A is one or more selected from Zn, Al, Na, K, Mg, Mo, W, Ti, V, Zr, Fe, Ni, Co, Ga, Sn, Sb, Nb, and Ge, and R is one or more selected from B, Si, N, and S. The shell includes a first coating layer and a second coating layer. The first coating layer includes a pyrophosphate MP₂O₇ and a phosphate XPO₄, where M and X each are one or more independently selected from Li, Fe, Ni, Mg, Co, Cu, Zn, Ti, Ag, Zr, Nb, and Al. The second coating layer is a doped carbon layer, where a doping element in the doped carbon layer includes any one or more selected from nitrogen, phosphorus, sulfur, boron, and fluorine.

## Description

### TECHNICAL FIELD

This application relates to the field of battery technologies, and in particular, to a positive electrode active material, a positive electrode plate, a secondary battery, a battery module, a battery pack, and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their energy density, cycling performance, safety performance, and the like.

Lithium manganese phosphate, as a positive electrode active material for a lithium-ion secondary battery, has the advantages of high capacity, good safety, and low cost. However, the rate performance of lithium manganese phosphate is poor, which restricts its commercial application.

### SUMMARY

This application provides a positive electrode active material, a positive electrode plate, a secondary battery, a battery module, a battery pack, and an electric apparatus to solve the problem that the positive electrode active material lithium manganese phosphate has poor rate performance.

A first aspect of this application provides a positive electrode active material having a core-shell structure, where the positive electrode active material includes a core and a shell enveloping the core; the core containing Li₁₊ₓMn_{1-y}A_{y}P_{1-z}R_{z}O₄, where x = -0.100 to 0.100, for example, x may be 0.006, 0.004, 0.003, 0.002, 0.001, 0, -0.001, -0.003, -0.004, -0.005, -0.006, -0.007, -0.008, -0.009, or -0.10; y = 0.001 to 0.500, for example, y may be 0.1, 0.2, 0.25, 0.3, 0.35, 0.4, or 0.45; z = 0.001 to 0.100, for example, z may be 0.001, 0.002, 0.003, 0.004, 0.005, 0.006, 0.007, 0.008, 0.009, or 0.1; A is one or more selected from a group consisting of Zn, Al, Na, K, Mg, Mo, W, Ti, V, Zr, Fe, Ni, Co, Ga, Sn, Sb, Nb, and Ge, and optionally is one or more from a group consisting of Fe, Ti, V, Ni, Co, and Mg; and R is one or more selected from a group consisting of B, Si, N, and S; and the shell including a first coating layer enveloping the core and a second coating layer enveloping the first coating layer, where the first coating layer includes a pyrophosphate MP₂O₇ and a phosphate XPO₄, where M and X each are one or more independently selected from a group consisting of Li, Fe, Ni, Mg, Co, Cu, Zn, Ti, Ag, Zr, Nb, and Al; and the second coating layer is a doped carbon layer, where a doping element in the doped carbon layer includes any one or more selected from a group consisting of nitrogen, phosphorus, sulfur, boron, and fluorine.

The positive electrode active material of this application can improve the gram capacity, cycling performance, and rate performance of the secondary battery. Although the mechanism is still unclear, it is presumed that the lithium manganese phosphate positive electrode active material of this application is a core-shell structure. Doping element A and element R respectively on the manganese site and phosphorus site of the lithium manganese phosphate core can not only effectively reduce the dissolving-out amount of manganese, reduce manganese ions migrated to the negative electrode, reduce the electrolyte consumed due to the decomposition of the SEI, and improve the cycling performance and safety performance of the secondary battery, but also can promote the adjustment of the Mn-O bond, lower the migration barrier of lithium ions, promote the migration of lithium ions, and improve the rate performance of the secondary battery. Application of the first coating layer including pyrophosphate and phosphate on the core can further increase the migration resistance of manganese, reduce the dissolving-out amount of manganese, decrease the content of impurity lithium on the surface, and reduce the contact between the core and the electrolyte, thereby reducing interfacial side reactions, reducing gas produced, and improving high-temperature storage performance, cycling performance, and safety performance of the secondary battery. Further, application of the carbon-containing layer served as the second coating layer can further improve the safety performance and kinetic performance of the secondary battery. In addition, introducing doping element atoms into the carbon layer alters the charge distribution around carbon atoms, improving the conductivity of the carbon layer. Additionally, the doping element creates a defect structure within the carbon material, facilitating the rapid migration of lithium ions. Further, the doping element generates a new functional group containing nitrogen on the carbon surface, so as to form new active sites, enhancing the solvation and desolvation speed of lithium ions, and thereby improving the capacity and rate performance.

In any embodiment of the first aspect, based on a weight of the core, an application amount of the doped carbon layer is greater than 0wt% and less than or equal to 6wt%, and optionally from 3wt% to 5wt%. With the application amount of the second coating layer falling in the foregoing range, the kinetic performance and safety performance of the battery can be further improved while the gram capacity of the positive electrode active material is maintained.

In any embodiment of the first aspect, a mass percentage of the doping element in the doped carbon layer is below 30%, and optionally a mass percentage of the doping element in the doped carbon layer is below 20%. The doping element being in the foregoing percentage range can improve the electrical conductivity of the pure carbon layer and effectively avoids excessive surface activity caused by adding an excessive amount of the doping element, thereby effectively controlling interfacial side reactions caused by excessive doping of the coating layer.

In any embodiment of the first aspect, the doping element is nitrogen, phosphorus, sulfur, boron, or fluorine. Selecting single type of element as the doping element helps to control the performance of the doped carbon layer.

In any embodiment of the first aspect, optionally, the doping element is element nitrogen or element sulfur, and a mass percentage of the doping element in the doped carbon layer ranges from 1% to 15%. Nitrogen atoms and sulfur atoms have an atomic radius closer to carbon atoms and are unlikely to destroy the carbon skeleton. Therefore, with the doping amount of nitrogen or sulfur atoms falling in the foregoing relatively wide range, the conductivity of the doped carbon layer can be fully made use of, and the lithium ion transport and lithium ion desolvation capacity can be increased.

In any embodiment of the first aspect, optionally, the doping element is element phosphorus, element boron, or element fluorine, and a mass percentage of the doping element in the doped carbon layer ranges from 0.5% to 5%. Element phosphorus, element boron, and element fluorine have an atomic radius quite different from carbon atoms and are likely to destroy the carbon skeleton in a case of excessive doping. Therefore, with the doping amount of element phosphorus, element boron, or element fluorine falling in the foregoing relatively narrow range, the conductivity of the doped carbon layer can be fully made use of, and the lithium ion transport and lithium ion desolvation capacity can be increased.

In any embodiment, the phosphate in the first coating layer has an interplanar spacing of 0.345 nm to 0.358 nm and an included angle of 24.25° to 26.45° in the (111) crystal orientation, and the pyrophosphate in the first coating layer has an interplanar spacing of 0.293 nm to 0.326 nm and an included angle of 26.41° to 32.57° in the (111) crystal orientation. This further improves the cycling performance and rate performance of the secondary battery.

In any embodiment of the first aspect, a ratio of y to 1-y in the core ranges from 1:10 to 10:1, and optionally from 1:4 to 1:1. This further improves the cycling performance and rate performance of the secondary battery.

In any embodiment of the first aspect, a ratio of z to 1-z in the core ranges from 1:9 to 1:999, and optionally from 1:499 to 1:249. This further improves the cycling performance and rate performance of the secondary battery.

In any embodiment of the first aspect, based on a weight of the core, an application amount of the first coating layer is greater than 0wt% and less than or equal to 7wt%, and optionally from 4wt% to 5.6wt%. With the application amount of the first coating layer falling in the foregoing range, the function of first coating layer can be effectively exerted, and in addition, the kinetic performance of the secondary battery is not affected due to the coating layer being too thick.

In any embodiment of the first aspect, a weight ratio of the pyrophosphate to the phosphate in the first coating layer ranges from 1:3 to 3:1, and optionally from 1:3 to 1:1. Therefore, with the pyrophosphate and the phosphate falling in a suitable weight ratio range, not only the dissolution of manganese can be effectively hindered, but also the content of lithium impurities on the surface can be effectively reduced and the interfacial side reactions can be reduced, thereby improving the high-temperature storage performance, the safety performance, and the cycling performance of the secondary battery.

In any embodiment of the first aspect, a crystallinity of the pyrophosphate and a crystallinity of the phosphate each independently range from 10% to 100%, and optionally from 50% to 100%. Therefore, the pyrophosphate and phosphate having the crystallinity in the foregoing ranges are conducive to fully exerting the function of the pyrophosphate in hindering the dissolution of manganese, and conducive to fully exerting the function of the phosphate in reducing the content of lithium impurities on the surface and the interfacial side reactions.

In any embodiment of the first aspect, A is at least two selected from of Fe, Ti, V, Ni, Co, and Mg. Therefore, with A being two or more metals falling in the foregoing range, doping at the manganese site is beneficial to enhance the doping effect and further reduce the surface oxygen activity, thereby inhibiting the dissolution of manganese.

In any embodiment of the first aspect, a Li/Mn anti-site defect concentration of the positive electrode active material is below 4%, and optionally below 2%. Therefore, the Li/Mn anti-site defect concentration being in the foregoing range can prevent Mn²⁺ from hindering the transport of Li⁺ and improve the gram capacity and rate performance of the positive electrode active material.

In any embodiment of the first aspect, a lattice change rate of the positive electrode active material is below 6%, and optionally below 4%. Thereby, the lattice change rate being in the foregoing range can further prevent excessive interfacial stress from affecting Li⁺ transport, thereby enhancing the rate performance of the secondary battery.

In any embodiment of the first aspect, a surface oxygen valence of the positive electrode active material is below -1.88, and optionally from -1.98 to -1.88. Thereby, the surface oxygen valence of the positive electrode material being in the foregoing range can avoid the following cases that may be caused: because the positive electrode material has excessively high surface oxygen valence and excessively strong ability to obtain electrons, the interfacial side reactions between the positive electrode material and the electrolyte are increased, thereby affecting the improvement of the cycling performance and the high-temperature storage performance of the secondary battery.

In any embodiment of the first aspect, a compacted density of the positive electrode active material under 3 tons (T) is above 2.0 g/cm³, and optionally above 2.2 g/cm³. Therefore, the compacted density of the positive electrode active material being in the foregoing range makes weight of the active material per unit volume higher, which is more conducive to increasing the volumetric energy density of the secondary battery.

A second aspect of this application provides a positive electrode plate including a positive electrode current collector and a positive electrode film layer provided on at least one surface of the positive electrode current collector, where the positive electrode film layer includes the positive electrode active material according to any one of the first aspect or a positive electrode active material prepared according to any one of the preparation methods of the second aspect; and optionally, based on a total weight of the positive electrode film layer, a percentage of the positive electrode active material in the positive electrode film layer is above 10wt%, and further optionally from 95wt% to 99.5wt%.

A third aspect of this application provides a secondary battery including any one of the positive electrode active materials according to the first aspect or the positive electrode plate according to the second aspect.

A fourth aspect of this application provides a battery module including a secondary battery, where the secondary battery is the secondary battery according to the third aspect.

A fifth aspect of this application provides a battery pack including a battery module, where the battery module is the battery module according to the fourth aspect.

A sixth aspect of this application provides an electric apparatus including a secondary battery, a battery module, or a battery pack, where the secondary battery is selected from the secondary battery according to the third aspect, the battery module is the battery module according to the fourth aspect, or the battery pack is the battery pack according to the fifth aspect.

The characteristics of the positive electrode active material of this application enable the secondary battery, battery module, or battery pack including the positive electrode active material to have high cycling performance and rate performance, thereby providing high kinetic cycle stability and rate performance for the electric apparatus having the secondary battery, battery module, or battery pack of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a comparison diagram of the XRD spectra of lithium manganese phosphate before being enveloped with the first coating layer and the second coating layer of Example 1-1 of this application and the standard XRD spectra (00-033-0804) of lithium manganese phosphate.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5; and
FIG. 7 is a schematic diagram of an electric apparatus using a secondary battery as a power source according to an embodiment of this application.

The accompanying drawings are not drawn to scale.

Reference signs are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

Embodiments that specifically disclose a positive electrode active material, a positive electrode plate, a secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (for example, lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

### [Positive electrode active material]

In this specification, the term "coating layer" is a material layer enveloping the core, the material layer can completely or partially envelope the core, and the use of "coating layer" is only for ease of description but not intended to limit the present invention. Similarly, the term "thickness of the coating layer" refers to a thickness of the substance layer applied on the core in a radial direction of the core.

In this specification, the term "source" refers to a compound that is a source of an element. For example, types of "source" include but are not limited to carbonates, sulfates, nitrates, elementary substances, halides, oxides, and hydroxides.

The inventors of this application have found in actual operation that the lithium manganese phosphate positive electrode active material is prone to large dissolving-out amount of manganese during deep charge and discharge. Although there are attempts in the prior art to envelope lithium manganese phosphate with lithium iron phosphate to reduce the interfacial side reactions, such enveloping cannot prevent the dissolved manganese migrating into the electrolyte. The dissolved manganese is reduced to metal manganese after migrating to the negative electrode. The metal manganese produced is equivalent to "catalyst", which can catalyze the decomposition of SEI (solid electrolyte interphase, solid electrolyte interphase) on the surface of the negative electrode. Part of the by-products produced is gas, which easily leads to the swelling of the battery and affects the safety performance of the secondary battery. The other part of the by-products produced is deposited on the surface of the negative electrode, which obstructs the channel of lithium ions into and out of the negative electrode, causing an increase in the impedance of the secondary battery and affecting the kinetic performance of the battery. In addition, to supplement the lost SEI, the electrolyte and the active lithium inside the battery are continuously consumed, which has irreversible effects on the capacity retention rate of the secondary battery.

The inventors have found, after extensive research, that for lithium manganese phosphate positive electrode active material, the problems of serious manganese dissolution and high surface reactivity may be caused by the ginger-Taylor effect of Mn³⁺ and the change in the Li⁺ channel size after the lithium deintercalation. In this regard, the inventors have, by modifying lithium manganese phosphate, obtained positive electrode active material capable of significantly reducing the dissolving-out amount of manganese and lowering the lattice change rate, and thus possessing good cycling performance, high-temperature storage performance, and safety performance.

An embodiment of this application provides a positive electrode active material having a core-shell structure, where the positive electrode active material includes a core and a shell enveloping the core; the core containing Li₁₊ₓMn_{1-y}A_{y}P_{1-z}R_{z}O₄, where x = -0.100 to 0.100, y = 0.001 to 0.500, z = 0.001 to 0.100; A is one or more selected from a group consisting of Zn, Al, Na, K, Mg, Mo, W, Ti, V, Zr, Fe, Ni, Co, Ga, Sn, Sb, Nb, and Ge, and optionally is one or more from a group consisting of Fe, Ti, V, Ni, Co, and Mg; and R is one or more selected from a group consisting of B, Si, N, and S; and the shell including a first coating layer enveloping the core and a second coating layer enveloping the first coating layer, where the first coating layer includes a pyrophosphate MP₂O₇ and a phosphate XPO₄, where M and X each are one or more independently selected from a group consisting of Li, Fe, Ni, Mg, Co, Cu, Zn, Ti, Ag, Zr, Nb, and Al; and the second coating layer is a doped carbon layer, where a doping element in the doped carbon layer includes any one or more selected from a group consisting of nitrogen, phosphorus, sulfur, boron, and fluorine.

Unless otherwise specified, in the foregoing chemical formula, when A is two or more elements, the foregoing limitation on the numerical range of y is not only a limitation on the stoichiometric number of each element as Abut also a limitation on the sum of the stoichiometric numbers of all elements denoted by A. For example, when A is more than two of elements A1, A2, ..., and An, the stoichiometric numbers y1, y2, ..., and yn corresponding to A1, A2, ..., and An each shall fall in the numerical range defined by this application for y, and the sum of y1, y2, ..., and yn shall also fall in the numerical range. Similarly, when R is more than two elements, the limitation on the numerical range of the stoichiometric numbers of R in this application also has the preceding meaning.

The lithium manganese phosphate positive electrode active material of this application is a core-shell structure having two coating layers, where the core contains Li₁₊ₓMn_{1-y}A_{y}P_{1-z}R_{z}O₄. The element A doping at the manganese site of lithium manganese phosphate in the core helps to reduce the lattice change rate of lithium manganese phosphate in the process of lithium deintercalation, to improve the structural stability of the lithium manganese phosphate positive electrode material, to greatly reduce the dissolving-out amount of manganese, and to reduce the oxygen activity on the surface of the particles. The element R doping at the phosphorus site helps to lower the difficulty in changing the length of the Mn-O bond, thereby reducing the migration barrier of lithium ions, promoting the migration of lithium ions, and improving the rate performance of the secondary battery.

The first coating layer of the positive electrode active material of this application includes pyrophosphate and phosphate. Because the transition metal has high migration barrier in the pyrophosphate (>1 eV), the dissolution of the transition metal can be effectively inhibited. The phosphate has excellent ability to conduct lithium ions, and thus the content of lithium impurities on the surface can be reduced. In addition, as a carbon-containing layer, the second coating layer can effectively improve the electrical conductivity and desolvation ability of LiMnPO₄. In addition, the "barrier" function of the second coating layer can further hinder the migration of manganese ions into the electrolyte and reduce the corrosion of the electrolyte to the active material. In addition, introducing doping element atoms into the second coating layer alters the charge distribution around carbon atoms, improving the conductivity of the second coating layer. Additionally, the doping element creates a defect structure within the carbon material, facilitating the rapid migration of lithium ions. Further, the doping element generates a new functional group containing nitrogen on the carbon surface, so as to form new active sites, enhancing the solvation and desolvation speed of lithium ions, and thereby improving the capacity and rate performance.

Therefore, in this application, performing specific element doping and surface coating on lithium manganese phosphate can reduce effectively inhibit the dissolution of Mn during lithium deintercalation and intercalation, and promote the migration of lithium ions, thereby improving the rate performance of the cell and improving the cycling performance and high-temperature performance of the secondary battery.

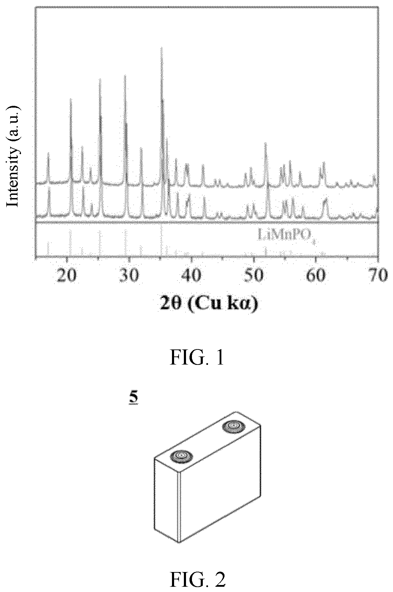

It should be noted that, as shown in FIG. 1, by comparing the XRD spectra of LiMnPO₄ before and after doping in this application, positions of main characteristic peaks of the positive electrode active material in this application are basically consistent with those of LiMnPO₄ before doping, indicating that the doped lithium manganese phosphate positive electrode active material has no impurity phase and that the improvement of the performance of the secondary battery is mainly attributed to the element doping rather than impurity phases.

In some embodiments of the first aspect, based on a weight of the core, an application amount of the doped carbon layer is greater than 0wt% and less than or equal to 6wt%, and optionally from 3wt% to 5wt%. The carbon-containing layer as the second coating layer can function as a "barrier" to prevent direct contact between the positive electrode active material and the electrolyte, so as to reduce the corrosion of the electrolyte to the active material and to improve the safety performance of the battery at high temperatures. In addition, the carbon-containing layer has high electrical conductivity and therefore, can reduce the internal resistance of the battery, thereby improving the kinetic performance of the battery. However, the carbon material has a low gram capacity, and therefore, under the condition that the second coating layer is used in an excessive amount, the gram capacity of the entire positive electrode active material may be reduced. Therefore, with the application amount of the second coating layer falling in the foregoing range, the kinetic performance and safety performance of the battery can be further improved while the gram capacity of the positive electrode active material is maintained.

Although the doped carbon layer has an advantage of better conductivity over the pure carbon layer, a higher proportion of the doping element in the doped carbon layer means a more active shell layer. In some embodiments of the first aspect, the mass percentage of the doping element in the doped carbon layer is below 30%; and optionally, the mass percentage of the doping element in the doped carbon layer is below 20%. The doping element being in the foregoing percentage range can improve the electrical conductivity of the pure carbon layer and effectively avoids excessive surface activity caused by adding an excessive amount of the doping element, thereby effectively controlling interfacial side reactions caused by excessive doping of the coating layer.

The doping elements in the second coating layer of the positive electrode active material in this application may be a single type of element or a combination of multiple types of elements. Because different elements have different conductivity and abilities to form surface defects, to more precisely adjust the performance of the doped carbon layer, in some embodiments of the first aspect, optionally, the doping element is nitrogen, phosphorus, sulfur, boron, or fluorine. Selecting a single type of element as the doping element helps to control the performance of the doped carbon layer.

Furthermore, because different elements have different conductivity and abilities to form surface defects, to realize full play of the effect of the doping element, the proportions of different types of doping elements are tested.

In some embodiments of the first aspect, optionally, the doping element is element nitrogen or element sulfur, and a mass percentage of the doping element in the doped carbon layer ranges from 1% to 15%. Nitrogen atoms and sulfur atoms have an atomic radius closer to carbon atoms and are unlikely to destroy the carbon skeleton. Therefore, with the doping amount of nitrogen or sulfur atoms falling in the foregoing relatively wide range, the conductivity of the doped carbon layer can be fully made use of, and the lithium ion transport and lithium ion desolvation capacity can be increased.

In some embodiments of the first aspect, optionally, the doping element is element phosphorus, element boron, or element fluorine, and a mass percentage of the doping element in the doped carbon layer ranges from 0.5% to 5%. Element phosphorus, element boron, and element fluorine have an atomic radius quite different from carbon atoms and are likely to destroy the carbon skeleton in a case of excessive doping. Therefore, with the doping amount of element phosphorus, element boron, or element fluorine falling in the foregoing relatively narrow range, the conductivity of the doped carbon layer can be fully made use of, and the lithium ion transport and lithium ion desolvation capacity can be increased.

In some embodiments of the first aspect, optionally, the phosphate in the first coating layer has an interplanar spacing of 0.345 nm to 0.358 nm and an included angle of 24.25° to 26.45° in the (111) crystal orientation, and the pyrophosphate in the first coating layer has an interplanar spacing of 0.293 nm to 0.326 nm and an included angle of 26.41° to 32.57° in the (111) crystal orientation. With the interplanar spacings and the included angles in the (111) crystal orientation of the phosphate and the pyrophosphate in the first coating layer in the foregoing ranges, the impurity phase in the coating can be effectively avoided, thereby increasing the gram capacity, the cycling performance, and rate performance of the material.

In some embodiments of the first aspect, optionally, a ratio of y to 1-y in the core ranges from 1:10 to 10:1, and optionally from 1:4 to 1:1. Herein, y denotes the sum of the stoichiometric numbers of elements doping at the Mn site. The energy density and cycling performance of the positive electrode active material can be further improved when the preceding conditions are met.

In some embodiments of the first aspect, optionally, a ratio of z to 1-z in the core ranges from 1:9 to 1:999, and optionally from 1:499 to 1:249. Herein, y denotes the sum of the stoichiometric numbers of elements doping at the P site. The energy density and cycling performance of the positive electrode active material can be further improved when the preceding conditions are met.

In some embodiments of the first aspect, optionally, based on a weight of the core, an application amount of the first coating layer is greater than 0wt% and less than or equal to 7wt%, and optionally from 4wt% to 5.6wt%. With the application amount of the first coating layer falling in the foregoing range, the dissolution of manganese can be further inhibited and lithium ion transport can be further promoted, and the following cases can be effectively avoided: if the application amount of the first coating layer is too small, the inhibition of pyrophosphate to the dissolution of manganese may be insufficient, and the improvement of the lithium ion transport performance is not significant; and if the application amount of the first coating layer is too large, the coating layer may be too thick, increasing the impedance of the battery, and affecting the kinetic performance of the battery.

In some embodiments of the first aspect, optionally, a weight ratio of the pyrophosphate to the phosphate in the first coating layer ranges from 1:3 to 3: 1, and optionally from 1:3 to 1:1. A proper ratio of the pyrophosphate to the phosphate is conducive to giving full play to the synergistic effect of the two, and the following cases can be effectively avoided: if there is too much pyrophosphate and too little phosphate, the impedance of the battery may increase; if there is too much phosphate and too little pyrophosphate, the effect of inhibiting the dissolution of manganese is not significant.

In some embodiments of the first aspect, optionally, a crystallinity of the pyrophosphate and a crystallinity of the phosphate each independently range from 10% to 100%, and optionally from 50% to 100%. In the first coating layer of the lithium manganese phosphate positive electrode active material, the pyrophosphate and phosphate having a specific crystallinity is conducive to maintaining the structural stability of the first coating layer and reducing lattice defects. This is beneficial to give full play to the effect of the pyrophosphate on hindering the dissolution of manganese and also beneficial for the phosphate to reduce the amount of lithium impurities contained on the surface and decreasing the surface oxygen valence, thereby reducing interfacial side reactions between the positive electrode material and the electrolyte, reducing the consumption of electrolyte, and improving the cycling performance and safety performance of the battery.

It should be noted that in this application, the crystallinity of the pyrophosphate and the crystallinity of the phosphate can be adjusted, for example, by adjusting the process conditions such as sintering temperature and sintering time of the sintering process. The crystallinity of the pyrophosphate and the crystallinity of the phosphate may be measured by methods known in the art, for example, by methods such as X-ray diffraction, densimetry, infrared spectroscopy, differential scanning calorimetry, and nuclear magnetic resonance absorption.

In some embodiments of the first aspect, optionally, A is at least two selected from of Fe, Ti, V, Ni, Co, and Mg. Two or more of the foregoing elements simultaneously doping at the manganese site in the lithium manganese phosphate positive electrode active material is beneficial to enhance the doping effect, thereby further reducing the lattice change rate, suppressing the dissolution of manganese, and decreasing the consumption of electrolyte and active lithium, and also beneficial to lower the surface oxygen activity and reduce the interfacial side reactions between the positive electrode active material and the electrolyte, thereby improving the cycling performance and high-temperature storage performance of the battery.

In some embodiments of the first aspect, optionally, a Li/Mn anti-site defect concentration of the positive electrode active material is below 4%, and optionally below 2%. In the positive electrode active material in this application, the Li/Mn anti-site defect refers to site exchange of Li⁺ and Mn²⁺ in LiMnPO₄ lattice. Because the Li⁺ transport channel is a one-dimensional channel, Mn²⁺ is difficult to migrate in the Li⁺ transport channel, and thus the Mn²⁺ anti-site defect hinders the Li transport. With the Li/Mn anti-site defect concentration controlled at a low level, the gram capacity and rate performance of LiMnPO₄ can be improved. In this application, the anti-site defect concentration can be determined, for example, according to JIS K 0131-1996.

In some embodiments of the first aspect, optionally, a lattice change rate of the positive electrode active material is below 6%, and optionally below 4%. The process of deintercalation of lithium in LiMnPO₄ is a two-phase reaction. The interfacial stress of the two phases is determined by the magnitude of the lattice change rate, where a smaller lattice change rate indicates a lower interfacial stress and easier Li⁺ transfer. Therefore, lowering the lattice change rate of the core is beneficial to increase the Li⁺ transport capacity, thereby improving the rate performance of the secondary battery.

In some embodiments of the first aspect, optionally, a surface oxygen valence of the positive electrode active material is below -1.88, and optionally from -1.98 to -1.88. This is because a higher valence of oxygen in the compound indicates stronger electron gaining ability, that is, stronger oxidation. In the lithium manganese phosphate positive electrode active material according to some embodiments, controlling the surface oxygen valence at a lower level can reduce the reaction activity on the surface of the positive electrode material and reduce the interfacial side reaction between the positive electrode material and the electrolyte, thereby improving the cycling performance and high-temperature storage performance of the secondary battery.

In some embodiments of the first aspect, optionally, a compacted density of the positive electrode active material under 3 tons (T) is above 2.0 g/cm³, and optionally above 2.2 g/cm³. A higher compacted density of the positive electrode active material, that is, a higher weight of the active material per unit volume, is more conducive to increasing the volumetric energy density of the battery. In this application, the compacted density can be determined, for example, according to GB/T 24533-2009.

This application further provides a preparation method of positive electrode active material. The method includes the following steps:
a step of providing a core material, the core containing Li₁₊ₓMn_{1-y}A_{y}P_{1-z}R_{z}O₄, where x = -0.100 to 0.100, y = 0.001 to 0.500, z = 0.001 to 0.100, A is one or more selected from Zn, Al, Na, K, Mg, Mo, W, Ti, V, Zr, Fe, Ni, Co, Ga, Sn, Sb, Nb, and Ge, and optionally is one or more of Fe, Ti, V, Ni, Co, and Mg, and R is one or more selected from B, Si, N, and S; and
a coating step: providing MP₂O₇ powder and XPO₄ suspension containing a carbon source and a source of doping element, and adding the core material and the MP₂O₇ powder to the XPO₄ suspension containing a carbon source and a source of doping element for mixing and sintering to obtain a positive electrode active material, where M and X are each one or more independently selected from Li, Fe, Ni, Mg, Co, Cu, Zn, Ti, Ag, Zr, Nb, or Al;
where the positive electrode active material has a core-shell structure, and the positive electrode active material includes a core and a shell enveloping the core, the shell including a first coating layer enveloping the core and a second coating layer enveloping the first coating layer, where the first coating layer contains a pyrophosphate MP₂O₇ and a phosphate XPO₄, and the second coating layer is a doped carbon layer, where a doping element in the doped carbon layer includes any one or more selected from a group consisting of nitrogen, phosphorus, sulfur, boron, and fluorine.

The preparation method of this application has no particular limitation on the source of the material. Optionally, the core material in the preparation method of this application may be commercially obtained or may be obtained by the preparation method of this application. Optionally, the core material is obtained by the preparation method hereinafter.

In some embodiments, optionally, the step of providing a core material includes the following steps:
step (1): mixing and stirring a manganese source and an acid in a container to obtain manganese salt particles doped with element A; and
step (2): mixing the manganese salt particles doped with element A with a lithium source, a phosphorus source, and the source of element R in a solvent to obtain a slurry, and sintering the slurry under protection of an inert gas atmosphere to obtain a lithium manganese phosphate doped with element A and element R, where the lithium manganese phosphate doped with element A and element R is Li₁₊ₓMn_{1-y}A_{y}P_{1-z}R_{z}O₄, x = -0.100 to 0.100, y = 0.001 to 0.500, z = 0.001 to 0.100, A is one or more selected from Zn, Al, Na, K, Mg, Mo, W, Ti, V, Zr, Fe, Ni, Co, Ga, Sn, Sb, Nb, and Ge, and optionally is one or more of Fe, Ti, V, Ni, Co, and Mg, and R is one or more selected from B, Si, N, and S.

In some embodiments, optionally, step (1) is carried out at a temperature of 20°C to 120°C, and optionally 25°C to 80°C; and/or, the stirring in step (1) is carried out at 500 rpm to 700 rpm for 60 minutes to 420 minutes, and optionally 120 minutes to 360 minutes. By controlling the reaction temperature, the stirring rate, and the mixing time during doping, the doping element can be evenly distributed, the lattice defects can be reduced, the dissolution of manganese can be inhibited, and the interfacial side reactions between the positive electrode active material and the electrolyte can be reduced, such that the gram capacity, the rate performance, and the like of the material can be improved.

It should be noted that, in the above steps (1) and (2), the source of an element may include one or more of elementary substance, sulfate, halide, nitrate, organic acid salt, oxide, or hydroxide of the element, provided that the source achieves the purpose of the preparation method of this application. For example, the source of element A is one or more selected from elementary substance, sulfate, halide, nitrate, organic acid salt, oxide, or hydroxide of element A; and/or the source of element R is one or more selected from elementary substance, sulfate, halide, nitrate, organic acid salt, oxide, or hydroxide of element R and inorganic acid of element R.

In some embodiments, optionally, the manganese source may be one or more selected from elemental manganese, manganese dioxide, manganese phosphate, manganese oxalate, and manganese carbonate.

In some embodiments, optionally, element A is iron, and optionally, an iron source is one or more selected from ferrous carbonate, ferric hydroxide, and ferrous sulfate.

In some embodiments, optionally, in step (1), the acid is one or more selected from hydrochloric acid, sulfuric acid, nitric acid, phosphoric acid, and organic acid such as oxalic acid, and optionally is oxalic acid. In some embodiments, the acid is dilute acid with a concentration below 60wt%.

In some embodiments, optionally, the inorganic acid of element R is one or more selected from phosphoric acid, nitric acid, boric acid, metasilicic acid, and protosilicic acid.

In some embodiments, optionally, the lithium source is one or more selected from lithium carbonate, lithium hydroxide, lithium phosphate, and lithium dihydrogen phosphate.

In some embodiments, optionally, the phosphorus source is one or more selected from diammonium phosphate, ammonium dihydrogen phosphate, ammonium phosphate, and phosphoric acid.

In addition, in some embodiments, optionally, the carbon source in the coating step is a source of organic carbon, and the source of organic carbon is one or more selected from starch, sucrose, glucose, polyvinyl alcohol, polyethylene glycol, and citric acid.

In some embodiments, the source of doping element is one or more selected from a group consisting of source of element nitrogen, source of element phosphorus, source of element sulfur, source of element boron, and source of element fluorine. The source of element nitrogen is any one or more selected from a group consisting of ethylenediamine, melamine, benzylamine, acetonitrile, ammoniated sucrose, pyrrole, aniline, acrylonitrile, polyimide acid, and nitrogen-containing aliphatic heterocyclic compound. The source of element phosphorus is any one or more selected from a group consisting of elemental phosphorus, phosphorus pentoxide, ammonium dihydrogen phosphate, ammonium phosphate, phosphoric acid, hypophosphorous acid, phosphorous acid, metaphosphoric acid, pyrophosphoric acid, polyphosphoric acid, phytic acid, phosphorus trichloride, phosphorus pentachloride, phosphorus tribromide, triphenoxyphosphine, triphenylphosphine, and tributylphosphine. The source of element sulfur is any one or more selected from a group consisting of selected from sulfur powder, sulfuric acid, sulfurous acid, ammonium sulfate, thiophene, thiazole, thiourea, dimethyl sulfoxide, thioacetamide, and thiol. The source of element boron is any one or more selected from a group consisting of elemental boron, boric acid, diboron trioxide, boron nitride, trimethyl borate, sodium tetraphenylborate, and boron trichloride. The source of element fluorine is any one or more selected from a group consisting of hydrofluoric acid, ammonium fluoride, and fluorine-containing organic substance. The fluorine-containing organic substance is selected from any one of fluorine-containing alkane, fluorine-containing olefin, fluorine-containing aromatic hydrocarbon, and fluorine-containing carboxylic acid. By selecting the source of each doping element, the doping element can have a more uniform distribution, thereby improving the performance of the material.

The fluorine-containing organic substance may be further any one or more selected from a group consisting of difluoromethane, difluoroethane, polytrifluoroethylene, polytetrafluoroethylene, polyvinylidene fluoride, polyvinyl fluoride, and the like.

In some embodiments, optionally, the solvent used in the preparation method of this application is a solvent commonly used in the art. For example, each solvent in the preparation method of this application may be at least one independently selected from ethanol and water (for example, deionized water).

In some embodiments, optionally, the pH of the solution is controlled to be 4-6 in the process of preparing the manganese salt particles doped with element A. It should be noted that the pH of the obtained mixture in this application may be adjusted by methods commonly used in the art, for example, by adding an acid or alkali.

In some embodiments, optionally, a molar ratio of the manganese salt particles to the lithium source and the phosphorus source in step (2) is 1:0.5-2.1:0.5-2.1.

Optionally, in some embodiments, in step (2), the sintering condition is that: the sintering is carried out at 600°C to 800°C for 4 hours to 10 hours under an atmosphere of inert gas or a mixture of inert gas and hydrogen.

Optionally, in some embodiments, the mixture of inert gas and hydrogen is nitrogen (70vol% to 90vol%) + hydrogen (10vol% to 30vol%).

In some embodiments, optionally, the MP₂O₇ powder is a commercially available product, or optionally, the MP₂O₇ powder is prepared by the following method: adding a source of elemental M and a phosphorus source to a solvent to obtain a mixture, adjusting the pH of the mixture to be 4-6, stirring for sufficient reaction, and drying and sintering the mixture to obtain the powder, where M is one or more selected from Li, Fe, Ni, Mg, Co, Cu, Zn, Ti, Ag, Zr, Nb, or Al.

Optionally, in some embodiments, the drying step in the preparation of the MP₂O₇ powder is carried out for 4h to 8 h at 100°C to 300°C, and optionally 150 to 200°C.

Optionally, in some embodiments, the sintering step in the preparation of the MP₂O₇ powder is carried out for 4h to 10h at 500°C to 800°C, and optionally 650°C to 800°C, under an atmosphere of inert gas.

In some embodiments, optionally, the XPO₄ suspension containing the carbon source is commercially available, or optionally, is prepared by the following method: mixing the lithium source, the source of X, the phosphorus source, the carbon source, and the source of the doping element in a solvent, then heating the reaction mixture to 60°C to 120°C and maintaining this temperature for 2 hours to 8 hours to obtain the XPO₄ suspension containing the carbon source. Optionally, the pH of the mixture is adjusted to 4 to 6 during preparation of the XPO₄ suspension containing the carbon source.

Optionally, in some embodiments, in the coating step, a mass ratio of the core material, the MP₂O₇ powder, and the XPO₄ suspension containing the carbon source and the source of doping element is 1:(0.001-0.05):(0.001-0.05).

In some embodiments, optionally, in the coating step, the sintering temperature is 500°C to 800°C, and the sintering time is 4h to 10h.

In some embodiments, optionally, the median particle size Dᵥ50 of the primary particles of the lithium manganese phosphate positive electrode active material with two coating layers in this application ranges from 50 nm to 2000 nm.

### [Positive electrode plate]

Another embodiment of this application provides a positive electrode plate, the positive electrode plate including a positive electrode current collector and a positive electrode film layer provided on at least one surface of the positive electrode current collector, where the positive electrode film layer includes the positive electrode active material according to any one of the first aspect or a positive electrode active material prepared according to any one of the preparation methods of the second aspect; and optionally, based on a total weight of the positive electrode film layer, a percentage of the positive electrode active material in the positive electrode film layer is above 10wt%, and further optionally from 95wt% to 99.5wt%.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may alternatively be another well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, and carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolyte salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

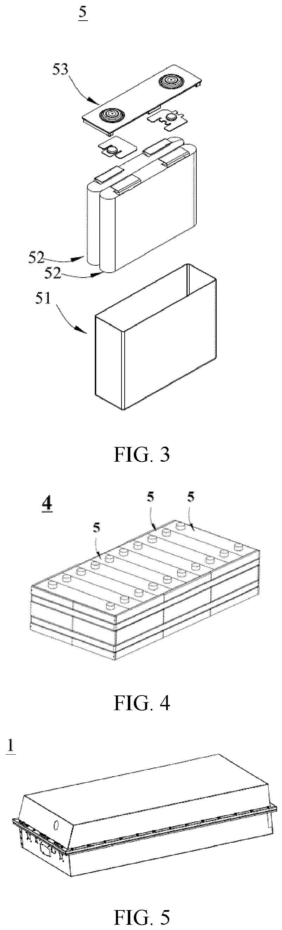

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Refer to FIG. 4. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

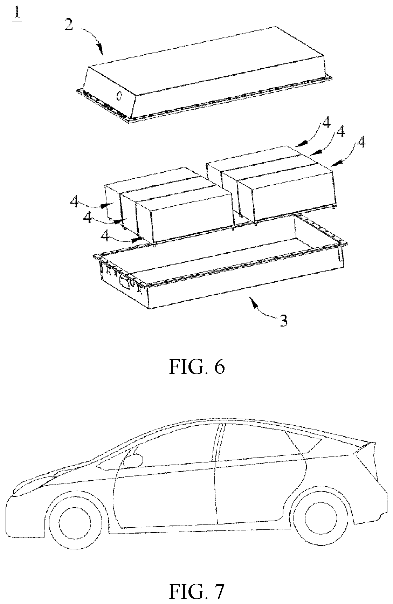

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The raw materials used in the embodiments of this application are sourced as follows:

| Name | Chemical formula | Manufacturer | Specification |
|---|---|---|---|
| Manganese carbonate | MnCO₃ | Shandong Xiya Reagent Co., Ltd. | 1 Kg |
| Lithium carbonate | Li₂CO₃ | Shandong Xiya Reagent Co., Ltd. | 1 Kg |
| Magnesium carbonate | MgCO₃ | Shandong Xiya Reagent Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Material Co., Ltd. | 1 Kg |
| Nickel sulfate | NiCO₃ | Shandong Xiya Reagent Co., Ltd. | 1 Kg |
| Titanium sulfate | Ti(SO₄)₂ | Shandong Xiya Reagent Co., Ltd. | 1 Kg |
| Cobalt sulfate | CoSO₄ | Xiamen Simagchem Co., Ltd. | 500 g |
| Vanadium dichloride | VCl₂ | Shanghai Jinjinle Industry Co., Ltd. | 1 Kg |
| Oxalic acid dihydrate | C₂H₂O₄^{•}2H₂O | Shanghai Jinjinle Industry Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Haisian Biotechnology Co., Ltd. | Mass fraction 60% |
| Nitric acid | HNO₃ | Anhui Lingtian Fine Chemical Co., Ltd. | Mass fraction 60% |
| Metasilicic acid | H₂SiO₃ | Shanghai Yuanye Biotechnology Co., Ltd. | 100 g |
| Boric acid | H₃BO₃ | Changzhou Qidi Chemical Co., Ltd | 1 Kg |
| Phosphoric acid | H₃PO₄ | Shanghai Aladdin Biochemical Technology Co., Ltd | Mass fraction 85% |
| Ethylenediamine | C₂H₈N₂ | Shanghai Aladdin Biochemical Technology Co., Ltd | 500 g |
| Hydrofluoric acid | HF | Shanghai Aladdin Biochemical Technology Co., Ltd | 500 mL, 40% |

### Example 1-1

### [Preparation of lithium manganese phosphate positive electrode active material enveloped with two layers]

### (1) Preparation of co-doped lithium manganese phosphate core

Preparation of Fe, Co, and V co-doped manganese oxalate: 689.5 g of manganese carbonate (denoted as MnCOs, the same applies hereinafter), 455.2 g of ferrous carbonate (denoted as FeCOs, the same applies hereinafter), 4.6 g of cobalt sulfate (denoted as CoSO₄, the same applies hereinafter), and 4.9 g of vanadium dichloride (denoted as VCl₂, the same applies hereinafter) were thoroughly mixed in a mixer for 6 hours; the resulting mixture was transferred to a reactor, followed by adding 5 liters of deionized water and 1260.6 g of oxalic acid dihydrate (denoted as C₂H₂O₄·2H₂O, the same applies hereinafter); the reactor was heated to 80°C, and stirring was carried out at 600 rpm for 6 hours until the reaction was terminated (no bubbles were generated), and a Fe, Co, V, and S co-doped manganese oxalate suspension was obtained; and the suspension was then filtered and the resulting filter cake was dried at 120°C and then milled to obtain Fe, Co, and V co-doped manganese oxalate dihydrate particles with a median particle size Dᵥ50 of 100 nm.

Preparation of Fe, Co, V, and S co-doped lithium manganese phosphate: The manganese oxalate dihydrate particles (1793.4 g) obtained in the previous step, 369.0 g of lithium carbonate (denoted as Li₂CO₃, the same applies hereinafter), 1.6 g of dilute sulfuric acid with a concentration of 60% (denoted as 60% H₂SO₄, the same applies hereinafter), and 1148.9 g of ammonium dihydrogen phosphate (denoted as NH₄H₂PO₄, the same applies hereinafter) were added to 20 liters of deionized water, and the resulting mixture was stirred for 10 hours and mixed to uniformity to obtain a slurry; the slurry was transferred to a spray drying apparatus for spray drying and granulation, with the drying temperature set to 250°C and the drying time set to 4 hours, to obtain a powder; and in a protective atmosphere of nitrogen (90vol%) + hydrogen (10vol%), the powder was sintered at 700°C for 4 hours to obtain 1572.1 g of Fe, Co, V, and S co-doped lithium manganese phosphate.

### (2) Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate, and 1.3 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 650°C under nitrogen atmosphere for 8 hours, cooled naturally to room temperature, and milled to obtain a Li₂FeP₂O₇ powder.

**Preparation of lithium iron phosphate suspension:** 11.1 g of lithium carbonate, 34.8 g of ferrous carbonate, 34.5 g of ammonium dihydrogen phosphate, and 1.3 g of oxalic acid dihydrate were mixed, and then the mixture was stirred for 6 hours for sufficient reaction; and then the solution after reaction was heated to 120°C and maintained at that temperature for 6 hours to obtain a suspension containing LiFePO₄.

### (3) Application

1572.1 g of the Fe, Co, V, and S co-doped lithium manganese phosphate, 74.6 g of sucrose (denoted as C₁₂H₂₂O₁₁, the same applies hereinafter), 6.32 g of ethylenediamine, and 15.72 g of the lithium iron pyrophosphate (Li₂FeP₂O₇) powder were added to the lithium iron phosphate (LiFePO₄) suspension prepared in the previous step; and the foregoing substances were stirred and mixed to uniformity and then transferred to a vacuum oven to dry at 150°C for 6 hours; the resulting product was then dispersed by milling; and after dispersion, the resulting product was sintered in a nitrogen atmosphere at 700°C for 6 hours to obtain a target product, namely, lithium manganese phosphate enveloped with two layers.

### [Preparation of positive electrode plate]

The prepared lithium manganese phosphate positive electrode active material enveloped with two layers, a conductive agent acetylene black, and a binder polyvinylidene fluoride (PVDF) were added at a weight ratio of 92:2.5:5.5 to N-methylpyrrolidone (NMP), stirred and mixed to uniformity to obtain a positive electrode slurry; and the positive electrode slurry was applied onto an aluminum foil at 0.280 g/1540.25 mm², followed by drying, cold pressing, and slitting, to obtain a positive electrode plate.

### [Preparation of negative electrode plate]

A negative electrode active substance artificial graphite, hard carbon, a conductive agent acetylene black, a binder styrene-butadiene rubber (SBR), a thickener sodium carboxymethyl cellulose (CMC-Na) were dissolved at a weight ratio of 90:5:2:2:1 in a solvent deionized water, stirred and mixed to uniformity to obtain a negative electrode slurry; and the negative electrode slurry was applied onto a negative electrode current collector copper foil at 0.117 g/1540.25 mm², followed by drying, cold pressing, and slitting, to obtain a negative electrode plate.

### [Preparation of electrolyte]

In an argon atmosphere glove box (H₂O < 0.1 ppm, and O₂ < 0.1 ppm), ethylene carbonate (EC) and ethyl methyl carbonate (EMC) were mixed uniformly at a volume ratio of 3:7 to obtain an organic solvent, 12.5wt% (based on weight of the organic solvent) LiPF₆ was dissolved in the organic solvent, and the solution was well stirred to obtain a uniform electrolyte.

### [Separator]

A commercially available PP-PE copolymer microporous film (from Advanced Electronic Technology Co., Ltd. model 20) with a thickness of 20 µm and an average pore size of 80 nm was used.

### [Preparation of full battery]

The positive electrode plate, separator, and negative electrode plate obtained above were stacked in order, such that the separator was placed between the positive and negative electrodes for separation, and winding was performed to obtain a jelly roll. The jelly roll was placed in an outer package, the electrolyte was injected, and the outer package was sealed to obtain a full battery (also referred to as "full battery" hereinafter).

### [Preparation of button battery]

The prepared lithium manganese phosphate positive electrode active material enveloped with two layers, PVDF, and acetylene black were added at a weight ratio of 90:5:5 to NMP, and stirred in a drying room to obtain a slurry; the slurry was applied onto an aluminum foil, followed by drying and cold pressing, to obtain a positive electrode plate; and The application amount was 0.2 g/cm² and the compacted density was 2.0 g/cm³.

A lithium sheet used as the negative electrode, a solution containing ethylene carbonate (EC) + diethyl carbonate (DEC) + dimethyl carbonate (DMC) at a volume ratio of 1:1:1 and 1 mol/L LiPF₆ used as the electrolyte, and the prepared positive electrode plate were assembled together in a button battery box to form a button battery (also referred to as "button battery" hereafter).

### Examples 1-2 to 1-6

The preparation conditions for lithium manganese phosphate cores in Examples 1-2 to 1-6 were the same as those in Example 1-1, except that neither vanadium dichloride nor cobalt sulfate was used and that 463.4 g of ferrous carbonate, 1.6 g of dilute sulfuric acid with a concentration of 60%, 1148.9 g of ammonium dihydrogen phosphate, and 369.0 g of lithium carbonate were used during the preparation of the co-doped lithium manganese phosphate core.

In addition, conditions were the same as those in Example 1-1, except that during the preparation of lithium iron pyrophosphate and lithium iron phosphate and during the application of the first coating layer and the second coating layer, the raw materials used were adjusted accordingly based on ratios of the application amounts shown in Table 1 to the corresponding application amount in Example 1-1 such that the amounts of Li₂FeP₂O₇/LiFePO₄ in Examples 1-2 to 1-6 were respectively 12.6 g/37.7 g, 15.7 g/47.1 g, 18.8 g/56.5 g, 22.0/66.0 g, and 25.1 g/75.4 g, and that the amount of sucrose and ethylenediamine in Examples 1-2 to 1-6 were respectively 37.3 g and 3.17 g.

### Examples 1-7 to 1-10

The conditions in Examples 1-7 to 1-10 were the same as those of Example 1-3, except that the amounts of sucrose were 74.6 g, 149.1 g, 186.4 g, and 223.7 g, respectively, and that the amounts of ethylenediamine were 6.32, 12.64, 15.80 g, and 45.51 g, respectively, for adjusting the application amount of the second coating layer.

### Examples 1-11 to 1-14

The conditions in Examples 1-11 to 1-14 were the same as those in Example 1-7, except that the amounts of various raw materials were adjusted accordingly based on the application amounts shown in Table 1 such that the amounts of Li₂FeP₂O₇/LiFePO₄ were respectively 23.6 g/39.3 g, 31.4 g/31.4 g, 39.3 g/23.6 g, and 47.2 g/15.7 g during the preparation of lithium iron pyrophosphate and the lithium iron phosphate.

### Example 1-15

The conditions in Example 1-15 were the same as those in Example 1-14, except that 492.80 g of ZnCO₃ was used in place of ferrous carbonate during the preparation of the co-doped lithium manganese phosphate core in Example 1-15.

### Examples 1-16 to 1-18

The conditions in Examples 1-17 to 1-19 were the same as those in Example 1-7, except that 466.4 g of NiCO₃, 5.0 g of zinc carbonate, and 7.2 g of titanium sulfate were used in place of ferrous carbonate during the preparation of the co-doped lithium manganese phosphate core in Example 1-16; and that 455.2 g of ferrous carbonate and 8.5 g of vanadium dichloride were used during the preparation of the co-doped lithium manganese phosphate core in Example 1-17; and that 455.2 g of ferrous carbonate, 4.9 g of vanadium dichloride, and 2.5 g of magnesium carbonate were used during the preparation of the co-doped lithium manganese phosphate core in Example 1-18.

### Examples 1-19 to 1-20

The conditions in Examples 1-19 and 1-20 were the same as those in Example 1-18, except that 369.4 g of lithium carbonate and 1.05 g of dilute nitric acid with a concentration of 60% in place of dilute sulfuric acid were used during the preparation of the co-doped lithium manganese phosphate core in Example 1-19, and that 369.7 g of lithium carbonate and 0.78 g of silicate in place of dilute sulfuric acid were used during the preparation of the co-doped lithium manganese phosphate core in Example 1-20.

### Examples 1-21 to 1-22

The conditions in Examples 1-21 and 1-22 were the same as those in Example 1-20, except that 632.0 g of manganese carbonate, 463.30 g of ferrous carbonate, 30.5 g of vanadium dichloride, 21.0 g of magnesium carbonate, and 0.78 g of silicate were used during the preparation of the co-doped lithium manganese phosphate core in Example 1-21; and that 746.9 g of manganese carbonate, 289.6 g of ferrous carbonate, 60.9 g of vanadium dichloride, 42.1 g of magnesium carbonate, and 0.78 g of silicate were used during the preparation of the co-doped lithium manganese phosphate core in Example 1-22.

### Examples 1-23 to 1-24

The conditions in Examples 1-23 and 1-24 were the same as those in Example 1-22, except that 804.6 g of manganese carbonate, 231.7 g of ferrous carbonate, 1156.2 g of ammonium dihydrogen phosphate, 1.2 g of boric acid (mass fraction of 99.5%), and 370.8 g of lithium carbonate were used during the preparation of the co-doped lithium manganese phosphate core in Example 1-23; and that 862.1 g of manganese carbonate, 173.8 g of ferrous carbonate, 1155.1 g of ammonium dihydrogen phosphate, 1.86 g of boric acid (mass fraction of 99.5%), and 371.6 g of lithium carbonate were used during the preparation of the co-doped lithium manganese phosphate core in Example 1-24.

### Example 1-25

The conditions in Example 1-25 were the same as those in Example 1-20, except that 370.1 g of lithium carbonate, 1.56 g of silica, and 1147.7 g of ammonium dihydrogen phosphate were used during the preparation of the co-doped lithium manganese phosphate core in Example 1-25.

### Example 1-26

The conditions in Example 1-26 were the same as those in Example 1-20, except that 368.3 g of lithium carbonate, 4.9 g of dilute sulfuric acid with a mass fraction of 60%, 919.6 g of manganese carbonate, 224.8 g of ferrous carbonate, 3.7 g of vanadium dichloride, 2.5 g of magnesium carbonate, and 1146.8 g of ammonium dihydrogen phosphate were used during the preparation of the co-doped lithium manganese phosphate core in Example 1-26.

### Example 1-27

The conditions in Example 1-27 were the same as those in Examples 1-20 except that 367.9 g of lithium carbonate, 6.5 g of dilute sulfuric acid with a concentration of 60%, and 1145.4 g of ammonium dihydrogen phosphate were used during the preparation of the co-doped lithium manganese phosphate core in Example 1-27.

### Examples 1-28 to 1-33

The conditions in Examples 1-28 and 1-33 were the same as those in Example 1-20, except that, during the preparation of the co-doped lithium manganese phosphate core in Examples 1-28 and 1-33, 1034.5 g of manganese carbonate, 108.9 g of ferrous carbonate, 3.7 g of vanadium dichloride, and 2.5 g of magnesium carbonate were used, the amounts of lithium carbonate used were 367.6 g, 367.2 g, 366.8 g, 366.4 g, 366.0 g, and 332.4 g, respectively, the amounts of ammonium dihydrogen phosphate used were 1144.5 g, 1143.4 g, 1142.2 g, 1141.1 g, 1139.9 g, and 1138.8 g, respectively, and the amount of 60% dilute sulfuric acid used were 8.2 g, 9.8 g, 11.4 g, 13.1 g, 14.7 g, and 16.3 g, respectively.

### Examples 2-1 to 2-4

### Example 2-1

The conditions were the same as those in Example 1-1, except that during the preparation of lithium iron pyrophosphate (Li₂FeP₂O₇), the sintering temperature in the powder sintering step was 550°C and the sintering time was 1h to control the crystallinity of Li₂FeP₂O₇ to be 30%, and that during the preparation of lithium iron phosphate (LiFePO₇), the sintering temperature in the application sintering step was 650°C and the sintering time was 2h to control the crystallinity of LiFePO₇ to be 30%.

### Example 2-2

The conditions were the same as those in Example 1-1, except that during the preparation of lithium iron pyrophosphate (Li₂FeP₂O₇), the sintering temperature in the powder sintering step was 650°C and the sintering time was 2h to control the crystallinity of Li₂FeP₂O₇ to be 50%, and that during the preparation of lithium iron phosphate (LiFePO₇), the sintering temperature in the application sintering step was 650°C and the sintering time was 3h to control the crystallinity of LiFePO₇ to be 50%.

### Example 2-3

The conditions were the same as those in Example 1-1, except that during the preparation of lithium iron pyrophosphate (Li₂FeP₂O₇), the sintering temperature in the powder sintering step was 600°C and the sintering time was 3h to control the crystallinity of Li₂FeP₂O₇ to be 70%, and that during the preparation of lithium iron phosphate (LiFePO₇), the sintering temperature in the application sintering step was 650°C and the sintering time was 4h to control the crystallinity of LiFePO₇ to be 70%.

### Example 2-4

The conditions were the same as those in Example 1-1, except that during the preparation of lithium iron pyrophosphate (Li₂FeP₂O₇), the sintering temperature in the powder sintering step was 650°C and the sintering time was 4h to control the crystallinity of Li₂FeP₂O₇ to be 100%, and that during the preparation of lithium iron phosphate (LiFePO₇), the sintering temperature in the application sintering step was 700°C and the sintering time was 6h to control the crystallinity of LiFePO₇ to be 100%.

### Examples 3-1 to 3-12

The conditions in Examples 3-1 to 3-12 were the same as those in Example 1-1, except that during the preparation of Fe, Co, and V co-doped manganese oxalate particles, the heating temperature/stirring time in the reactor in Example 3-1 were 60°C/120 minutes respectively, the heating temperature/stirring time in the reactor in Example 3-2 were 70°C/120 minutes respectively, the heating temperature/stirring time in the reactor in Example 3-3 were 80°C/120 minutes respectively, the heating temperature/stirring time in the reactor in Example 3-4 were 90°C/120 minutes respectively, the heating temperature/stirring time in the reactor in Example 3-5 were 100°C/120 minutes respectively, the heating temperature/stirring time in the reactor in Example 3-6 were 110°C/120 minutes respectively, the heating temperature/stirring time in the reactor in Example 3-7 were 120°C/120 minutes respectively, the heating temperature/stirring time in the reactor in Example 3-8 were 130°C/120 minutes respectively, the heating temperature/stirring time in the reactor in Example 3-9 were 100°C/60 minutes respectively, the heating temperature/stirring time in the reactor in Example 3-10 were 100°C/90 minutes respectively, the heating temperature/stirring time in the reactor in Example 3-11 were 100°C/150 minutes respectively, and the heating temperature/stirring time in the reactor in Example 3-12 were 100°C/180 minutes respectively.

### Examples 4-1 to 4-7

The conditions in Examples 4-1 to 4-4 were the same as those in Example 1-7, except that during the preparation of lithium iron pyrophosphate (Li₂FeP₂O₇), the drying temperature/drying time in the drying step were respectively 100°C/4h, 150°C/6h, 200°C/6h, and 200°C/6h; and that during the preparation of lithium iron pyrophosphate (Li₂FeP₂O₇), the sintering temperature and sintering time in the sintering step were respectively 700°C/6h, 700°C/6h, 700°C/6h, and 600°C/6h.

The conditions in Examples 4-5 to 4-7 were the same as those in Example 1-12, except that during the application, the drying temperature/drying time in the drying step were respectively 150°C/6h, 150°C/6h, and 150°C/6h; and that during the application, the sintering temperature and sintering time in the sintering step were respectively 600°C/4h, 600°C/6h, and 800°C/8h.

The conditions in Example 5-1 were the same as those of Example 1-2, except that the amount of ethylenediamine was adjusted to 0.1698 g.

The conditions in Example 5-2 were the same as those of Example 1-2, except that the amount of ethylenediamine was adjusted to 0.3425 g.

The conditions in Example 5-3 were the same as those of Example 1-2, except that the amount of ethylenediamine was adjusted to 7.193 g.

The conditions in Example 5-4 were the same as those of Example 1-2, except that the amount of ethylenediamine was adjusted to 10.7045 g.

The conditions in Example 5-5 were the same as those of Example 1-2, except that the amount of ethylenediamine was adjusted to 15.7 g.

The conditions in Example 5-6 were the same as those of Example 1-2, except that the amount of ethylenediamine was adjusted to 33.65 g.

The conditions in Example 5-7 were the same as those of Example 1-2, except that 3.26 g of ethylenediamine was replaced with 0.1170 g of phosphoric acid.

The conditions in Example 5-8 were the same as those of Example 1-2, except that 3.26 g of ethylenediamine was replaced with 0.2934 g of phosphoric acid.

The conditions in Example 5-9 were the same as those of Example 1-2, except that 3.26 g of ethylenediamine was replaced with 1.806 g of phosphoric acid.

The conditions in Example 5-10 were the same as those of Example 1-2, except that 3.26 g of ethylenediamine was replaced with 3.0732 g of phosphoric acid.

The conditions in Example 5-11 were the same as those of Example 1-2, except that 3.26 g of ethylenediamine was replaced with 5.0775 g of phosphoric acid.

The conditions in Example 5-12 were the same as those of Example 1-2, except that 3.26 g of ethylenediamine was replaced with 7.9647 g of phosphoric acid.

The conditions in Example 5-13 were the same as those of Example 1-2, except that 3.26 g of ethylenediamine was replaced with 14.6 g of phosphoric acid.

The conditions in Example 5-14 were the same as those of Example 1-2, except that 3.26 g of ethylenediamine was replaced with 0.403 g of sulfuric acid.

The conditions in Example 5-15 were the same as those of Example 1-2, except that 3.26 g of ethylenediamine was replaced with 0.8084 g of sulfuric acid.

The conditions in Example 5-16 were the same as those of Example 1-2, except that 3.26 g of ethylenediamine was replaced with 6.97 g of sulfuric acid.

The conditions in Example 5-17 were the same as those of Example 1-2, except that 3.26 g of ethylenediamine was replaced with 14.142 g of sulfuric acid.

The conditions in Example 5-18 were the same as those of Example 1-2, except that 3.26 g of ethylenediamine was replaced with 20.034 g of sulfuric acid.

The conditions in Example 5-19 were the same as those of Example 1-2, except that 3.26 g of ethylenediamine was replaced with 26.712 g of sulfuric acid.

The conditions in Example 5-20 were the same as those of Example 1-2, except that 3.26 g of ethylenediamine was replaced with 43.150 g of sulfuric acid.

The conditions in Example 5-21 were the same as those of Example 1-2, except that 3.26 g of ethylenediamine was replaced with 0.178 g of boric acid.

The conditions in Example 5-22 were the same as those of Example 1-2, except that 3.26 g of ethylenediamine was replaced with 0.445 g of boric acid.

The conditions in Example 5-23 were the same as those of Example 1-2, except that 3.26 g of ethylenediamine was replaced with 2.737 g of boric acid.

The conditions in Example 5-24 were the same as those of Example 1-2, except that 3.26 g of ethylenediamine was replaced with 4.657 g of boric acid.

The conditions in Example 5-25 were the same as those of Example 1-2, except that 3.26 g of ethylenediamine was replaced with 7.695 g of boric acid.

The conditions in Example 5-26 were the same as those of Example 1-2, except that 3.26 g of ethylenediamine was replaced with 12.067 g of boric acid.

The conditions in Example 5-27 were the same as those of Example 1-2, except that 3.26 g of ethylenediamine was replaced with 22.123 g of boric acid.

The conditions in Example 5-28 were the same as those of Example 1-2, except that 3.26 g of ethylenediamine was replaced with 0.083 g of hydrofluoric acid.

The conditions in Example 5-29 were the same as those of Example 1-2, except that 3.26 g of ethylenediamine was replaced with 0.208 g of hydrofluoric acid.

The conditions in Example 5-30 were the same as those of Example 1-2, except that 3.26 g of ethylenediamine was replaced with 1.278 g of hydrofluoric acid.

The conditions in Example 5-31 were the same as those of Example 1-2, except that 3.26 g of ethylenediamine was replaced with 2.175 g of hydrofluoric acid.

The conditions in Example 5-32 were the same as those of Example 1-2, except that 3.26 g of ethylenediamine was replaced with 3.593 g of hydrofluoric acid.

The conditions in Example 5-33 were the same as those of Example 1-2, except that 3.26 g of ethylenediamine was replaced with 5.634 g of hydrofluoric acid.

The conditions in Example 5-34 were the same as those of Example 1-2, except that 3.26 g of ethylenediamine was replaced with 10.329 g of hydrofluoric acid.

### Comparative Example 1

**Preparation of manganese oxalate:** 1149.3 g of manganese carbonate was added to the reactor, followed by adding 5 liters of deionized water and 1260.6 g of oxalic acid dihydrate (denoted as C₂H₂O₄•2H₂O, the same applies hereinafter). The reactor was heated to 80°C, and stirring was carried out at 600 rpm for 6 hours until the reaction was terminated (no air bubbles were generated), and a manganese oxalate suspension was obtained. The suspension was then filtered and a resulting filter cake was dried at 120°C and then milled to obtain manganese oxalate dihydrate particles with a median particle size Dᵥ50 of 100 nm.

**Preparation of doped lithium manganese phosphate enveloped with** carbon: 1789.6 g of manganese oxalate dihydrate particles obtained above, 369.4 g of lithium carbonate (denoted as Li₂CO₃, the same applies hereinafter), 1150.1 g of ammonium dihydrogen phosphate (denoted as NH₄H₂PO₄, the same applies hereinafter), 31 g sucrose, and 2.42 g of ethylenediamine (denoted as C₁₂H₂₂O₁₁, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time set to 4 hours, to obtain a powder; and in a protective atmosphere of nitrogen (90vol%) + hydrogen (10vol%), the powder was sintered at 700°C for 4 hours to obtain a doped lithium manganese phosphate enveloped with carbon.

### Comparative Example 2

The conditions in Comparative Example 2 were the same as those in Comparative Example 1, except that 689.5 g of manganese carbonate was used and that 463.3 g of ferrous carbonate was additionally added.

### Comparative Example 3

The conditions in Comparative Example 3 were the same as those in Comparative Example 1, except that 1148.9 g of ammonium dihydrogen phosphate and 369.0 g of lithium carbonate were used and that 1.6 g of dilute sulfuric acid with a concentration of 60% was additionally added.

### Comparative Example 4

The conditions in Comparative Example 4 were the same as those in Comparative Example 1, except that 689.5 g of manganese carbonate, 1148.9 g of ammonium dihydrogen phosphate, and 369.0 g of lithium carbonate were used and that 463.3 g of ferrous carbonate and 1.6 g of dilute sulfuric acid with a concentration of 60% were additionally added.

### Comparative Example 5

The conditions in Comparative Example 5 were the same as those in Comparative Example 4, except that the following steps were additionally added during preparation of lithium iron pyrophosphate powder: 9.52 g of lithium carbonate, 29.9 g of ferrous carbonate, 29.6 g of ammonium dihydrogen phosphate, and 32.5 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 500°C in a nitrogen atmosphere for 4 hours, naturally cooled to room temperature, and then milled to control the crystallinity of Li₂FeP₂O₇ to be 5%; and 62.8 g of Li₂FeP₂O₇ was used for preparation of the material enveloped with carbon.

### Comparative Example 6

The conditions in Comparative Example 6 were the same as those in Comparative Example 4, except that the following steps were additionally added during preparation of lithium iron phosphate suspension: 14.7 g of lithium carbonate, 46.1 g of ferrous carbonate, 45.8 g of ammonium dihydrogen phosphate, and 50.2 g of oxalic acid dihydrate were dissolved in 500 ml of deionized water, and then the mixture was stirred for 6 hours for sufficient reaction; and then the solution after reaction was heated to 120°C and maintained at that temperature for 6 hours to obtain a suspension containing LiFePO₄, that during the preparation of lithium iron phosphate (LiFePO₄), the sintering temperature in the application sintering step was 600°C and the sintering time was 4h to control the crystallinity of LiFePO₄ to be 8%, and that during the preparation of the material enveloped with carbon, the amount of LiFePO₄ used was 62.8 g.

### Comparative Example 7

**Preparation of lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 500°C under nitrogen atmosphere for 4 hours, cooled naturally to room temperature, and milled to control the crystallinity of Li₂FeP₂O₇ to be 5%.

**Preparation of lithium iron phosphate suspension:** 11.1 g of lithium carbonate, 34.7 g of ferrous carbonate, 34.4 g of ammonium dihydrogen phosphate, 37.7 g of oxalic acid dihydrate, 37.3 g of sucrose (denoted as C₁₂H₂₂O₁₁, the same applies hereinafter), and 3.265 g of ethylenediamine were dissolved in 1500 ml of deionized water, and the mixture was then stirred for 6 hours for sufficient reaction; then the solution after reaction was heated to 120°C and maintained at that temperature for 6 hours to obtain a suspension containing LiFePO₄.

15.7 g of the lithium iron pyrophosphate powder prepared was added to the lithium iron phosphate (LiFePO₄) and sucrose suspension. The conditions in Comparative Example 7 were the same as those in Comparative Example 4, except that during the preparation, the sintering temperature in the application sintering step was 600°C and the sintering time was 4h to control the crystallinity of LiFePO₄ to be 8%. A positive electrode active material enveloped with amorphous lithium iron pyrophosphate, amorphous lithium iron phosphate, and carbon was obtained.

### Comparative Examples 8 to 11

The conditions were the same as those in Example 1-7, except that during the preparation of lithium iron pyrophosphate (Li₂FeP₂O₇), the drying temperature/drying time in the drying step in Comparative Examples 8 to 10 were respectively 80°C/3h, 80°C/3h, and 80°C/3h, during the preparation of lithium iron pyrophosphate (Li₂FeP₂O₇), the sintering temperature/sintering time in the sintering step in Comparative Examples 8 to 10 were respectively 400°C/3h, 400°C/3h, 350°C/2h, and during the preparation of lithium iron phosphate (LiFePO4), the drying temperature/drying time in the drying step in Comparative Example 11 were 80°C/3h, and the amounts of Li₂FeP₂O₇/LiFePO₄ used in Comparative Examples 8 to 11 were respectively 47.2 g/15.7 g, 15.7 g/47.2 g, 62.8 g/0 g, and 0 g/62.8 g.

The conditions in Comparative Example 12 were the same as in Example 1-2 except that ethylenediamine was not used.

The [preparation of positive electrode plate], [preparation of negative electrode plate], [preparation of electrolyte], [separator], and [preparation of battery] in the foregoing examples and comparative examples are the same as the process of Example 1-1.

### [Test for related parameters]

### 1. Determination of chemical formula of core and composition of different coating layers

An aberration corrected scanning transmission electron microscope (ACSTEM) was used for high spatial resolution characterization of the internal microstructure and surface structure of the positive electrode active material, and the chemical formula of the core and the compositions of the first coating layer of the positive electrode active material were obtained in combination with three-dimensional reconstruction techniques. The proportion of the second coating layer was measured using an elemental analyzer. The proportion of the doping element in the second coating layer was measured using inductively coupled plasma emission spectroscopy.

### (1) Test for initial gram capacity of button battery:

The prepared button battery was charged to 4.3 V at 0.1C under a voltage of 2.5 V-4.3 V, then charged at constant voltage of 4.3 V to a current less than or equal to 0.05 mA, left standing for 5 min, and then discharged to 2.0 V at 0.1C, and a discharge capacity at that point was an initial gram capacity and recorded as D0.

### 2. Test for average discharge voltage (V) of button battery:

The prepared button battery was left standing for 5 min at a constant temperature of 25°C, discharged to 2.5 V at 0.1C, left standing for 5 minutes, charged to 4.3 V at 0.1C, and then charged at a constant voltage of 4.3 Vto a current less than or equal to 0.05 mA. After left standing for 5 min, the button battery was discharged to 2.5 V at 0.1C. A discharge capacity at that point was recorded as an initial gram capacity, denoted as D0, discharge energy was recorded as initial energy, denoted as E0, and the average discharge voltage V of the button battery was E0/D0.

### 3. Test for swelling of full battery at 60°C:

The prepared full batteries in 100% state of charge (SOC) were stored at 60°C. The open circuit voltage (OCV) and alternating current internal resistance (IMP) of the cells were measured before, during, and after the storage to monitor the SOCs and to measure the volumes of the cells. The full batteries were taken out after every 48h of storage and left standing for 1h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as F₁, then the cell was completely placed into deionized water (density given to be 1 g/cm³), and the weight of the cell at that point was measured as F₂. The buoyant force experienced by the cell, denoted as F_{buoyant}, was calculated as F₁-F₂. Then, according to Archimedes' principle, F_{buoyant}= ρ × g × V_{displaced}, the volume V of the cell could be calculated as V=(F₁-F₂)/(ρ × g).

It can be learned from the OCV and IMP test results that the batteries of all the examples always maintained an SOC of above 99% throughout the storage test.

After 30 days of storage, the cell volumes were measured and the proportion increases in the cell volumes after storage relative to the cell volumes before storage were calculated.

In addition, the remaining capacities of the cells were measured. The full batteries were charged to 4.3 V at 1C under a voltage of 2.5 V to 4.3 V, then charged at constant voltage of 4.3 V to a current less than or equal to 0.05 mA. The full batteries were left standing for 5 min. The charge capacities at that point were the remaining capacities of the cells.

### 4. 45°C cycling performance test of full battery:

Under a constant temperature of 45°C, the prepared full batteries were charged to 4.3 V at 1C under a voltage of 2.5 V to 4.3 V, and then charged at constant voltage of 4.3 V to a current less than or equal to 0.05 mA. After left standing for 5 min, the full battery was discharged to 2.5 V at 1C. The discharge capacity at that point was recorded as D0. The charge and discharge cycle was repeated until the discharge capacity was reduced to 80% of D0. The number of cycles the cell had undergone at that point was recorded.

### 5. Test for lattice change rate:

At a constant temperature of 25°C, the positive electrode active material samples prepared above were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 denotes the volume of the unit cell, which can be obtained directly from XRD refinement results) at that point were calculated with reference to standard PDF cards.

The positive electrode active material samples were prepared into button batteries using the foregoing preparation method of button battery, and the button batteries were charged at a small rate of 0.05C until the current was reduced to 0.01C. The positive electrode plate was then taken out from the button battery and placed in dimethyl carbonate (DMC) for 8 hours, dried, and scraped for powder, and particles with a particle size less than 500 nm were sifted out from the powder. Samples were taken and subjected to the same way as the fresh samples under test above to calculate their crystal cell volumes v1, and (v0-v1)/v0×100% was taken as their lattice change rates (crystal cell volume change rate) before and after complete lithium deintercalation and intercalation to be listed in the table.

### 6. Test for Li/Mn anti-site defect concentration:

The XRD results tested in "test method of lattice change rate" were compared with the PDF (Powder Diffraction File) card of the standard crystal to obtain the Li/Mn anti-site defect concentration. Specifically, the XRD results tested in the "test method of lattice change rate" were imported into the general structural analysis system (GSAS) software to automatically derive the refinement results, which contain the occupancy of the different atoms, and then the Li/Mn anti-site defect concentration was obtained by reading the refinement results.

### 7. Test for dissolution of transition metal:

The full batteries were cycled at 45°C until the capacity was faded to 80% and then discharged to a cut-off voltage of 2.0 V at 0.1C. The cell was then disassembled, the negative electrode plate was removed, and 30 discs with a unit area (1540.25 mm²) were randomly taken on the negative electrode plate and tested by using Agilent ICP-OES730 for inductively coupled plasma atomic emission spectrometry (ICP). The amounts of Fe (if the Mn site of the positive electrode active material was doped with Fe) and Mn were calculated from the ICP results, so as to calculate the dissolving-out amount of Mn (and Fe doped at the Mn site) after the cycling. The test standard is in accordance with EPA-6010D-2014.

### 8. Test for surface oxygen valence:

5 g of the prepared positive electrode active material sample was taken to prepare into a button battery according to the preparation method of button battery as described above. The button battery was charged at a small rate of 0.05C until the current was reduced to 0.01C. The positive electrode plate was then taken out from the button battery and placed in dimethyl carbonate (DMC) for 8 hours, dried, and scraped for powder, and particles with a particle size less than 500 nm were sifted out from the powder. The thus obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the surface oxygen valence after charging.

### 9. Measurement of compacted density:

5 g of the foregoing prepared positive electrode active material powder was taken and put in a special mold for compaction (CARVER mold, model 13 mm, USA), and then the mold was put on the compacted density apparatus. A pressure of 3T was applied, the thickness of the powder under the pressure (the thickness after pressure relief, with the container used for testing having an area of 1540.25 mm²) was read on the device, and the compacted density was calculated by ρ=m/v.

### 10. Test for crystallinity of pyrophosphate and phosphate by Xray diffraction method

5 g of the prepared positive electrode active material powder was taken, and a total scattering intensity was measured by X-ray, where the total scattering intensity was a sum of scattering intensities of substances in the entire space and was only related to the intensity of the primary rays, the chemical structure, a total number of electrons participating in the diffraction, that is, the mass, and not to the order state of the sample. Then, crystalline scattering was separated from non-crystalline scattering in a diffraction pattern, where the crystallinity is a ratio of a scattering intensity of the crystalline part to the total scattering intensity.

### 11. Interplanar spacing and included angle

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. at that point, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

### 12. Test method of ratio of 3C constant current charge

Under a constant temperature environment of 25°C, the new full batteries were left standing for 5 min, and then discharged to 2.5 V at 1/3C. The full batteries were left standing for 5 min, charged to 4.3 V at 1/3C, and then charged at a constant voltage of 4.3 V to a current less than or equal to 0.05 mA. The full batteries were left standing for 5 min. The charge capacity at that point was recorded as C0. The full batteries were discharge at 1/3C to 2.5 V, left standing for 5 min, then charged at 3C to 4.3 V, and left standing for 5 min. The charge capacity at that point was recorded as C1. The ratio of 3C constant current charge was C1/C0×100%.

A higher ratio of 3C constant current charge indicates better rate performance of the battery.

**Table 1 Performance test results of Examples 1-1 to 1-33 and Comparative Examples 1 to 7**

| Example number | Core | First coating layer | Second coating layer | Proport ion of doping element in second coating layer | Latti ce chan ge rate (%) | Li/ Mn anti-site defe ct cone entra tion (%) | Disso lving -out amou nts of Fe and Mn after cycli ng (ppm | Surfac e oxygen valenc e | Button battery gram capacit y at 0.1C (mAh/ g) | Ratio of 3C consta nt current charge (%) | Averag e dischar ge voltage of button battery (V) | Cell swell ing rate after 30 days of stora ge at 60°C (%) | Numb er of cycles corres ponding to 80% capacit y retenti on rate at 45°C | Com pacte d densi ty (g/cm ³) | |
|---|---|---|---|---|---|---|---|---|---|---|---|---|---|---|---|
| Example 1-1 | Li_{0.999}Mn_{0.60}Fe_{0.393}V_{0.00 4}Co_{0.003}P_{0.999}S_{0.001}O₄ | 1% Li₂FeP₂O₇/3% LiFePO₄ | 2% carbon | 8% N | 2.4 | 0.4 | 9 | -1.98 | 160.3 | 84.9 | 3.81 | 1.8 | 1345 | 2.41 | |
| Example 1-2 | Li_{0.999}Mn_{0.60}Fe_{0.40}P_{0.999} S_{0.001}O₄ | 0.8% Li₂FeP₂O₇/2.4 % LiFePO₄ | 1% carbon | 8% N | 6.6 | 1.2 | 62 | -1.97 | 155.6 | 83.3 | 3.78 | 6.5 | 806 | 2.43 | |
| Example 1-3 | Li_{0.999}Mn_{0.60}Fe_{0.40}P_{0.999} S_{0.001}O₄ | 1% Li₂FeP₂O₇/3% LiFePO₄ | 1% carbon | 8% N | 6.5 | 1.1 | 49 | -1.97 | 151.5 | 80.2 | 3.77 | 5.2 | 923 | 2.45 | |
| Example 1-4 | Li_{0.999}Mn_{0.60}Fe_{0.40}P_{0.999} S_{0.001}O₄ | 1.2% Li₂FeP₂O₇/3.6 % LiFePO₄ | 1% carbon | 8% N | 6.5 | 0.8 | 31 | -1.97 | 150.2 | 79.5 | 3.76 | 4.6 | 954 | 2.44 | |
| Example 1-5 | Li_{0.999}Mn_{0.60}Fe_{0.40}P_{0.999} S_{0.001}O₄ | 1.4% Li₂FeP₂O₇/4.2 % LiFePO₄ | 1% carbon | 8% N | 6.5 | 0.7 | 19 | -1.98 | 149.7 | 79.3 | 3.76 | 3.6 | 1098 | 2.45 | |
| Example 1-6 | Li_{0.999}Mn_{0.60}Fe_{0.40}P_{0.999} S_{0.001}O₄ | 1.6% Li₂FeP₂O₇/4.8 % LiFePO₄ | 1% carbon | 8% N | 6.6 | 0.6 | 16 | -1.98 | 148.8 | 78.8 | 3.75 | 2.7 | 1185 | 2.45 | |
| Example 1-7 | Li_{0.999}Mn_{0.60}Fe_{0.40}P_{0.999} S_{0.001}O₄ | 1% Li₂FeP₂O₇/3% LiFePO₄ | 2% carbon | 8% N | 6.5 | 1 | 45 | -1.97 | 150.7 | 79.8 | 3.76 | 4.9 | 971 | 2.46 | |
| Example 1-8 | Li_{0.999}Mn_{0.60}Fe_{0.40}P_{0.999} S_{0.001}O₄ | 1% Li₂FeP₂O₇/3% LiFePO₄ | 4% carbon | 8% N | 6.5 | 1 | 35 | -1.97 | 149.3 | 79.0 | 3.76 | 4.2 | 1001 | 2.47 | |
| Example 1-9 | Li_{0.999}Mn_{0.60}Fe_{0.40}P_{0.999} S_{0.001}O₄ | 1% Li₂FeP₂O₇/3% LiFePO₄ | 5% carbon | 8% N | 6.4 | 1.1 | 27 | -1.98 | 147.2 | 77.9 | 3.76 | 3.9 | 1156 | 2.44 | |
| Example 1-10 | Li_{0.999}Mn_{0.60}Fe_{0.40}P_{0.999} S_{0.001}O₄ | 1% Li₂FeP₂O₇/3% LiFePO₄ | 6% carbon | 8% N | 6.4 | 1.1 | 19 | -1.98 | 144.9 | 76.7 | 3.76 | 2.7 | 1199 | 2.41 | |
| Example 1-11 | Li_{0.999}Mn_{0.60}Fe_{0.40}P_{0.999} S_{0.001}O₄ | 1.5% Li₂FeP₂O₇/2.5 % LiFePO₄ | 2% carbon | 8% N | 6.5 | 1.1 | 36 | -1.97 | 150.8 | 79.8 | 3.77 | 5.3 | 932 | 2.44 | |
| Example 1-12 | Li_{0.999}Mn_{0.60}Fe_{0.40}P_{0.999} S_{0.001}O₄ | 2% Li₂FeP₂O₇/2% LiFePO₄ | 2% carbon | 8% N | 6.6 | 1 | 20 | -1.96 | 150.6 | 79.7 | 3.77 | 6.1 | 906 | 2.47 | |
| Example 1-13 | Li_{0.999}Mn_{0.60}Fe_{0.40}P_{0.999} S_{0.001}O₄ | 2.5% Li₂FeP₂O₇/1.5 % LiFePO₄ | 2% carbon | 8% N | 6.7 | 1.2 | 19 | -1.96 | 150.1 | 79.5 | 3.77 | 7 | 825 | 2.46 | |
| Example 1-14 | Li_{0.999}Mn_{0.60}Fe_{0.40}P_{0.999} S_{0.001}O₄ | 3% Li₂FeP₂O₇/l% LiFePO₄ | 2% carbon | 8% N | 6.7 | 1.1 | 9 | -1.97 | 149.9 | 79.4 | 3.78 | 7.4 | 775 | 2.45 | |
| Example 1-15 | Li_{0.999}Mn_{0.60}Zn_{0.40}P_{0.999} S_{0.001}O₄ | 3% Li₂FeP₂O₇/l% LiFePO₄ | 2% carbon | 8% N | 7.5 | 2.5 | 20 | -1.97 | 141.5 | 74.9 | 3.89 | 8.3 | 867 | 2.45 | |
| Example 1-16 | Li_{0.993}Mn_{0.6}Ni_{0.393}Zn_{0.0 04}Ti_{0.003}P_{0.999}S_{0.001}O₄ | 1% Li₂FeP₂O₇/3% LiFePO₄ | 2% carbon | 8% N | 5.4 | 0.8 | 13 | -1.97 | 142.2 | 75.3 | 3.89 | 4.3 | 985 | 2.44 | |
| Example 1-17 | Li_{0.999}Mn_{0.60}Fe_{0.393}V_{0.00 7}P_{0.999}S_{0.001}O₄ | 1% Li₂FeP₂O₇/3% LiFePO₄ | 2% carbon | 8% N | 4.2 | 0.6 | 12 | -1.97 | 156.3 | 82.7 | 3.81 | 3.1 | 1265 | 2.45 | |
| Example 1-18 | Li_{0.999}Mn_{0.60}Fe_{0.393}V_{0.00 4}Mg_{0.003}P_{0.999}S_{0.001}O₄ | 1% Li₂FeP₂O₇/3% LiFePO₄ | 2% carbon | 8% N | 2.6 | 0.5 | 10 | -1.97 | 158.7 | 84.0 | 3.83 | 2.6 | 1254 | 2.45 | |
| Example 1-19 | LiMn_{0.60}Fe_{0.393}V_{0.004}M g_{0.003}P_{0.999}N_{0.001}O₄ | 1% Li₂FeP₂O₇/3% LiFePO₄ | 2% carbon | 8% N | 2.3 | 0.5 | 9 | -1.98 | 160.8 | 85.1 | 3.83 | 2.2 | 1398 | 2.45 | |
| Example 1-20 | Li_{1.001}Mn_{0.60}Fe_{0.393}V_{0.00 4}Mg_{0.003}P_{0.999}Si_{0.001}O₄ | 1% Li₂FeP₂O₇/3% LiFePO₄ | 2% carbon | 8% N | 2.4 | 0.7 | 12 | -1.98 | 160.5 | 85.0 | 3.83 | 2.5 | 1365 | 2.44 | |
| Example 1-21 | Li_{1.001}Mn_{0.55}Fe_{0.40}V_{0.025} Mg_{0.025}P_{0.999}Si_{0.001}O₄ | 1% Li₂FeP₂O₇/3% LiFePO₄ | 2% carbon | 8% N | 2.2 | 0.5 | 8 | -1.98 | 161.6 | 85.6 | 3.75 | 2.1 | 1461 | 2.43 | |
| Example 1-22 | Li_{1.001}Mn_{0.65}Fe_{0.25}V_{0.05} Mg_{0.05}P_{0.999}Si_{0.001}O₄ | 1% Li₂FeP₂O₇/3% LiFePO₄ | 2% carbon | 8% N | 2.5 | 0.8 | 13 | -1.98 | 160.0 | 84.7 | 3.86 | 2.9 | 1302 | 2.42 | |
| Example 1-23 | Li_{1.004}Mn_{0.7}Fe_{0.2}V_{0.05}M g_{0.05}P_{0.998}B_{0.00204} | 1% Li₂FeP₂O₇/3% LiFePO₄ | 2% carbon | 8% N | 2.6 | 0.8 | 10 | -1.98 | 160.2 | 84.8 | 3.86 | 2.4 | 1297 | 2.43 | |
| Example 1-24 | Li_{1.006}Mn_{0.75}Fe_{0.15}V_{0.05} Mg_{0.05}P_{0.997}B_{0.003}O₄ | 1% Li₂FeP₂O₇/3% LiFePO₄ | 2% carbon | 8% N | 2.6 | 0.8 | 10 | -1.98 | 160.5 | 85.0 | 3.86 | 2.5 | 1354 | 2.44 | |
| Example 1-25 | Li_{1.002}Mn_{0.60}Fe_{0.393}V_{0.00 4}Mg_{0.003}P_{0.998}Si_{0.002}O₄ | 1% Li₂FeP₂O₇/3% LiFePO₄ | 2% carbon | 8% N | 2.3 | 0.7 | 10 | -1.98 | 160.4 | 84.9 | 3.81 | 2.3 | 1401 | 2.45 | |
| Example 1-26 | Li_{0.997}Mn_{0.80}Fe_{0.194}V_{0.00 3}Mg_{0.003}P_{0.997}S_{0.003}O₄ | 1% Li₂FeP₂O₇/3% LiFePO₄ | 2% carbon | 8% N | 2.8 | 0.9 | 12 | -1.98 | 159.2 | 84.3 | 3.88 | 3.0 | 1165 | 2.45 | |
| Example 1-27 | Li_{0.996}Mn_{0.60}Fe_{0.393}V_{0.00 4}Mg_{0.003}P_{0.996}S_{0.004}O₄ | 1% Li₂FeP₂O₇/3% LiFePO₄ | 2% carbon | 8% N | 2.2 | 0.6 | 11 | -1.98 | 160.7 | 85.1 | 3.81 | 2.3 | 1399 | 2.46 | |
| Example 1-28 | Li_{0.995}Mn_{0.9}Fe_{0.094}V_{0.003} Mg_{0.003}P_{0.995}S_{0.005}O₄ | 1% Li₂FeP₂O₇/3% LiFePO₄ | 2% carbon | 8% N | 3.2 | 1.1 | 14 | -1.96 | 159.9 | 84.7 | 3.92 | 3.2 | 1112 | 2.45 | |
| Example 1-29 | Li_{0.994}Mn_{0.90}Fe_{0.094}V_{0.00 3}Mg_{0.003}P_{0.994}S_{0.006}O₄ | 1% Li₂FeP₂O₇/3% LiFePO₄ | 2% carbon | 8% N | 3 | 1.2 | 14 | -1.95 | 159.2 | 84.3 | 3.92 | 3.3 | 1054 | 2.44 | |
| Example 1-30 | Li_{0.993}Mn_{0.90}Fe_{0.094}V_{0.00 3}Mg_{0.003}P_{0.993}S_{0.007}O₄ | 1% Li₂FeP₂O₇/3% LiFePO₄ | 2% carbon | 8% N | 2.8 | 1.4 | 15 | -1.95 | 158.9 | 84.1 | 3.92 | 3.1 | 965 | 2.45 | |
| Example 1-31 | Li_{0.992}Mn_{0.90}Fe_{0.094}V_{0.00 3}Mg_{0.003}P_{0.992}S_{0.008}O₄ | 1% Li₂FeP₂O₇/3% LiFePO₄ | 2% carbon | 8% N | 2.6 | 1.4 | 18 | -1.94 | 158.5 | 83.9 | 3.92 | 3.2 | 923 | 2.44 | |
| Example 1-32 | Li_{0.991}Mn_{0.90}Fe_{0.094}V_{0.00 3}Mg_{0.003}P_{0.991}S_{0.009}O₄ | 1% Li₂FeP₂O₇/3% LiFePO₄ | 2% carbon | 8% N | 2.4 | 1.2 | 17 | -1.94 | 157.9 | 83.6 | 3.92 | 2.9 | 901 | 2.45 | |
| Example 1-33 | Li_{0.9}Mn_{0.90}Fe_{0.094}V_{0.003} Mg_{0.003}P_{0.9}S_{0.1}O₄ | 1% Li₂FeP₂O₇/3% LiFePO₄ | 2% carbon | 8% N | 2.1 | 0.9 | 19 | -1.94 | 157.6 | 83.4 | 3.92 | 2.8 | 885 | 2.44 | |
| Comparative Example 1 | LiMnPO₄ | | - | 1% carbon | 8% N | 11.4 | 3.2 | 2041 | -1.55 | 128.1 | 67.8 | 4.05 | 45.6 | 194 | 1.81 |
| Comparative Example 2 | LiMn_{0.60}Fe_{0.40}PO₄ | | - | 1% carbon | 8% N | 8.7 | 2.8 | 1623 | -1.76 | 137.5 | 72.8 | 3.79 | 41.7 | 365 | 1.92 |
| Comparative Example 3 | Li_{0.999}MnP_{0.999}S_{0.001}O₄ | | - | 1% carbon | 8% N | 9.8 | 2.5 | 1956 | -1.66 | 131.2 | 69.5 | 4.08 | 44.8 | 271 | 1.88 |
| Comparative Example 4 | Li_{0.999}Mn_{0.60}Fe_{0.40}P_{0.999} S_{0.001}O₄ | | - | 1% carbon | 8% N | 6.7 | 1.8 | 1302 | -1.83 | 143.3 | 75.9 | 3.81 | 38.2 | 421 | 1.82 |
| Comparative Example 5 | Li_{0.999}Mn_{0.60}Fe_{0.40}P_{0.999} S_{0.001}O₄ | | 4% amorphous Li₂FeP₂O₇ | 1% carbon | 8% N | 6.5 | 1.8 | 225 | -1.9 | 143.1 | 75.8 | 3.76 | 13.5 | 532 | 1.79 |
| Comparative Example 6 | Li_{0.999}Mn_{0.60}Fe_{0.40}P_{0.999} S_{0.001}O₄ | | 4% amorphous LiFePO₄ | 1% carbon | 8% N | 6.6 | 1.8 | 321 | -1.91 | 143.0 | 75.7 | 3.77 | 12.2 | 535 | 1.83 |
| Comparative Example 7 | Li_{0.999}Mn_{0.60}Fe_{0.40}P_{0.999} S_{0.001}O₄ | | 1% amorphous Li₂FeP₂O₇ + 3% amorphous LiFePO₄ | 1% carbon | 8% N | 6.6 | 1.8 | 186 | -1.9 | 142.9 | 75.7 | 3.78 | 9.1 | 694 | 1.84 |
| | | Note: (1) The crystallinity of Li₂FeP₂O₇ and the crystallinity of LiFePO₄ in Examples 1-1 to 1-33 are all 100%; and (2) in Comparative Example 5 to 7, the crystallinity of Li₂FeP₂O₇ is 5% and the crystallinity of LiFePO₄ is 8%. | | | | | | | | | | | | | |

It can be learned from Examples 1-1 to 1-33 and Comparative Examples 1 to 4 that the presence of the first coating layer is conducive to reducing the Li/Mn anti-site defect concentration and the dissolving-out amounts of Fe and Mn after cycling in the resulting material, increasing the button battery gram capacity of the battery, and improving the safety performance and cycling performance of the battery. Under the condition that other elements dope at the Mn site and the phosphorus site separately, the lattice change rate, the anti-site defect concentration, and the dissolving-out amounts of Fe and Mn of the resulting material can be significantly reduced, the gram capacity of the battery can be increased, and the safety performance and cycling performance of the battery can be improved.

It can be learned from Examples 1-1 to 1-6 that as the application amount of the first coating layer is increased from 3.2% to 6.4%, in the resulting material, the Li/Mn anti-site defect concentration is gradually decreased, the dissolving-out amounts of Fe and Mn after cycling is gradually decreased, and the safety performance and cycling performance of the battery at 45°C are improved correspondingly, but the button battery gram capacity is slightly decreased. Optionally, the corresponding battery has the best comprehensive performance when the total amount of the first coating layer ranges from 4wt% to 5.6wt%.

It can be learned from Examples 1-3, and 1-7 to 1-10 that as the application amount of the second coating layer is increased from 1% to 6%, in the resulting material, the Li/Mn anti-site defect concentration is gradually decreased, the dissolving-out amounts of Fe and Mn after cycling is gradually decreased, and the safety performance and cycling performance of the battery at 45°C are improved correspondingly, but the button battery gram capacity is slightly decreased. Optionally, the corresponding battery has the best comprehensive performance when the total amount of the second coating layer ranges from 3wt% to 5wt%.

It can be learned from Examples 1-11 to 1-15 and Comparative Examples 5 and 6 that when both Li₂FeP₂O₇ and LiFePO₄ exist in the first coating layer, especially when a weight ratio of Li₂FeP₂O₇ to LiFePO₄ ranges from 1:3 to 3:1, and particularly from 1:3 to 1:1, the improvement of performance of the battery is more significant.

**Table 2 Performance test results of Examples 2-1 to 2-4**

| Example number | First coating layer | Crystalli nities of pyrophos phate and phosphat e¹ | Lattice change rate (%) | Li/Mn anti-site defect concent ration (%) | Dissolv ing-out amount s of Fe and Mn after cycling (ppm) | Surface oxygen valence | Button battery capacity at 0.1C (mAh/g) | Ratio of 3C constan t current charge (%) | Averag e dischar ge voltage of button battery (V) | Cell swellin g rate after 30 days of storage at 60°C (%) | Number of cycles correspon ding to 80% capacity retention rate at 45°C |
|---|---|---|---|---|---|---|---|---|---|---|---|
| Example 2-1 | 1% Li₂FeP₂O₇/3% LiFePO₄ | 30% | 6.3 | 1.9 | 152 | -1.88 | 148.10 | 78.4 | 3.74 | 5.4 | 712 |
| Example 2-2 | 1% Li₂FeP₂O₇/3% LiFePO₄ | 50% | 4.7 | 1.2 | 108 | -1.89 | 152.18 | 80.6 | 3.76 | 4.9 | 901 |
| Example 2-3 | 1% Li₂FeP₂O₇/3% LiFePO₄ | 70% | 3.5 | 0.8 | 32 | -1.91 | 154.33 | 81.7 | 3.77 | 3.9 | 1129 |
| Example 2-4 | 1% Li₂FeP₂O₇/3% LiFePO₄ | 100% | 2.4 | 0.4 | 9 | -1.98 | 161.36 | 85.4 | 3.81 | 2.1 | 1356 |
| | ¹: means that the crystallinity of Li₂FeP₂O₇ and the crystallinity of LiFePO₄ are each 30%, 50%, 70%, and 100%. | | | | | | | | | | |
| | In these examples, the application amount of the second coating layer was 2%, and the proportion of the doping element nitrogen therein was 8%. | | | | | | | | | | |

It can be seen from Table 2 that as the crystallinities of pyrophosphate and the phosphate in the first coating layer gradually increase, accordingly, in the resulting material, the lattice change rate, Li/Mn anti-site defect concentration, and dissolving-out amounts of Fe and Mn are gradually decreased, and in the battery, the button battery capacity is gradually increased and the safety performance and cycling performance are gradually improved.

**Table 3 Performance test results of Examples 3-1 to 3-12**

| Example number | Doping element type and doping amount | Temper ature in the reactor (°C) | Stirrin g time (min) | Lattice change rate (%) | Li/Mn anti-site defect concen tration (%) | Dissolvi ng-out amounts of Fe and Mn after cycling (ppm) | Surface oxygen valence | Button battery capacity at 0.1C (mAh/g) | Ratio of 3C constant current charge (%) | Average discharg e voltage of button battery (V) | Cell swelling rate after 30 days of storage at 60°C (%) | Number of cycles correspon ding to 80% capacity retention rate at 45°C | |
|---|---|---|---|---|---|---|---|---|---|---|---|---|---|
| Example 3-1 | Li_{0.999}Mn_{0.60}Fe_{0.393}V_{0.004} Co_{0.003}P_{0.999}S_{0.001}O₄ | 60 | 120 | 5.6 | 2.4 | 51 | -1.98 | 158.30 | 83.8 | 3.69 | 4.5 | 1085 | |
| Example 3-2 | Li_{0.999}Mn_{0.60}Fe_{0.393}V_{0.004} Co_{0.003}P_{0.999}S_{0.001}O₄ | 70 | 120 | 4.8 | 1.9 | 238 | -1.98 | 158.81 | 84.1 | 3.71 | 4.8 | 1256 | |
| Example 3-3 | Li_{0.999}Mn_{0.60}Fe_{0.393}V_{0.004} Co_{0.003}P_{0.999}S_{0.001}O₄ | 80 | 120 | 3.7 | 1.3 | 29 | -1.98 | 159.53 | 84.5 | 3.74 | 3.9 | 1310 | |
| Example 3-4 | Li_{0.999}Mn_{0.60}Fe_{0.393}V_{0.004} Co_{0.003}P_{0.999}S_{0.001}O₄ | 90 | 120 | 2.9 | 1.1 | 16 | -1.98 | 160.96 | 85.2 | 3.77 | 3.2 | 1452 | |
| Example 3-5 | Li_{0.999}Mn_{0.60}Fe_{0.393}V_{0.004} Co_{0.003}P_{0.999}S_{0.001}O₄ | 100 | 120 | 2.5 | 0.5 | 9 | -1.98 | 161.67 | 85.6 | 3.80 | 2.5 | 1298 | |
| Example 3-6 | Li_{0.999}Mn_{0.60}Fe_{0.393}V_{0.004} Co_{0.003}P_{0.999}S_{0.001}O₄ | 110 | 120 | 2.8 | 1.2 | 21 | -1.98 | 159.83 | 84.6 | 3.75 | 3.5 | 1296 | |
| Example 3-7 | Li_{0.999}Mn_{0.60}Fe_{0.393}V_{0.004} Co_{0.003}P_{0.999}S_{0.001}O₄ | 120 | 120 | 3.7 | 2.1 | 36 | -1.98 | 157.90 | 83.6 | 3.71 | 4.8 | 1202 | |
| Example 3-8 | Li_{0.999}Mn_{0.60}Fe_{0.393}V_{0.004} Co_{0.003}P_{0.999}S_{0.001}O₄ | 130 | 120 | 4.5 | 3.4 | 44 | -1.98 | 156.77 | 83.0 | 3.66 | 6.5 | 965 | |

| Example number | Doping element type and doping amount | | Temper ature in the reactor (°C) | Stirrin g time (min) | Lattice change rate (%) | Li/Mn anti-site defect concen tration (%) | Dissolvi ng-out amounts of Fe and Mn after cycling (ppm) | Surface oxygen valence | Button battery capacity at 0.1C (mAh/g) | Ratio of 3C constant current charge (%) | Average discharg e voltage of button battery (V) | Cell swelling rate after 30 days of storage at 60°C (%) | Number of cycles correspon ding to 80% capacity retention rate at 45°C |
|---|---|---|---|---|---|---|---|---|---|---|---|---|---|
| Example 3-9 | Li_{0.999}Mn_{0.60}Fe_{0.393}V_{0.004} Co_{0.003}P_{0.999}S_{0.001}O₄ | | 100 | 60 | 4.9 | 3.1 | 39 | -1.98 | 158.51 | 83.9 | 3.78 | 5.2 | 1008 |
| Example 3-10 | Li_{0.999}Mn_{0.60}Fe_{0.393}V_{0.004} Co_{0.003}P_{0.999}S_{0.001}O₄ | | 100 | 90 | 4.1 | 2.5 | 29 | -1.98 | 159.43 | 84.4 | 3.79 | 4.2 | 1023 |
| Example 3-11 | Li_{0.999}Mn_{0.60}Fe_{0.393}V_{0.004} Co_{0.003}P_{0.999}S_{0.001}O₄ | | 100 | 150 | 3.5 | 1.1 | 16 | -1.98 | 160.96 | 85.2 | 3.81 | 3.2 | 1098 |
| Example 3-12 | Li_{0.999}Mn_{0.60}Fe_{0.393}V_{0.004} Co_{0.003}P_{0.999}S_{0.001}O₄ | | 100 | 180 | 2.5 | 0.5 | 12 | -1.98 | 161.26 | 85.4 | 3.81 | 2.6 | 1325 |
| Note: | | The temperature in the reactor and the stirring time are the parameters used during the preparation of element A doped manganese oxalate (that is, step (1)). | | | | | | | | | | | |
| | | In these examples, the application amount of the second coating layer was 2%, and the proportion of the doping element nitrogen therein was 8%. | | | | | | | | | | | |

It can be seen from Table 3 that adjustment of the reaction temperature and reaction time in the reactor during the preparation of manganese oxalate particles can further improve the various performance of the positive electrode material in this application. For example, when the reaction temperature is gradually increased from 60°C to 130°C, the lattice change rate and Li/Mn anti-site defect concentration are decreased first and then increased, and the dissolving-out amount of metal after cycling and the safety performance also correspondingly present a similar pattern, while the button battery capacity and the cycling performance are increased first and then decreased with the increase in temperature. With the reaction temperature controlled to be constant, adjustment of the reaction time can also present a similar pattern.

**Table 4 Performance test results of Examples 4-1 to 4-7 and Comparative Examples 8 to 11**

| Example number | Li₂FeP₂O₇:LiFePO ₄ (weight ratio) | Drying temperatur e (°C) | Dryin g time (h) | Sintering temperatur e (°C) | Sinterin g time (h) | Interplanar spacing of pyrophosphat e in first coating layer (nm) | Included angle of pyrophosphat e in first coating layer (°) | Interplana r spacing of phosphate in first coating layer (nm) | Included angle of phosphat e in first coating layer (°) | Lattice chang e rate (%) | anti-site defect concentratio n (%) | Surfac e oxygen valenc e | Button battery capacity at 0.1C (mAh/g ) | Ratio of 3C constan t current charge (%) | Average discharg e voltage; of button battery (V) | Cell swellin g rate after 30 days of storage at 60°C (%) | Number of cycles correspondin g to 80% capacity retention rate at 45°C |
|---|---|---|---|---|---|---|---|---|---|---|---|---|---|---|---|---|---|
| Example 4-1 | 1:3 | 100 | 4 | 700 | 6 | 0.303 | 29.496 | 0.348 | 25.562 | 2.9 | 0.6 | -1.97 | 158.7 | 84.0 | 3.73 | 3.5 | 1203 |
| 4-2 | 1:3 | 150 | 6 | 700 | 6 | 0.303 | 29.496 | 0.348 | 25.562 | 2.6 | 0.6 | -1.98 | 161.0 | 85.2 | 3.80 | 2.3 | 1356 |
| 4-3 | 1:3 | 200 | 6 | 700 | 6 | 0.303 | 29.496 | 0.348 | 25.562 | 2.7 | 0.6 | -1.98 | 159.5 | 84.4 | 3.75 | 3.2 | 1302 |
| 4-4 | 1:3 | 200 | 6 | 600 | 6 | 0.303 | 29.496 | 0.348 | 25.562 | 2.9 | 1.1 | -1.95 | 156.9 | 83.1 | 3.71 | 4.1 | 996 |
| 4-5 | 1:1 | 150 | 6 | 600 | 4 | 0.303 | 29.496 | 0.348 | 25.562 | 2.8 | 1.2 | -1.94 | 158.8 | 84.1 | 3.73 | 3.3 | 912 |
| 4-6 | 1:1 | 150 | 6 | 600 | 6 | 0.303 | 29.496 | 0.348 | 25.562 | 2.6 | 0.8 | -1.95 | 159.4 | 84.4 | 3.74 | 3.3 | 985 |
| 4-7 | 1:1 | 150 | 6 | 800 | 8 | 0.303 | 29.496 | 0.348 | 25.562 | 2.5 | 0.4 | -1.97 | 160.1 | 84.8 | 3.76 | 2.5 | 1023 |
| Comparativ e Example 8 | 1:3 | 80 | 3 | 400 | 3 | - | - | - | - | 3.9 | 1.8 | -1.91 | 151.0 | 79.9 | 3.69 | 10.2 | 768 |
| 9 | 1:1 | 80 | 3 | 400 | 3 | - | - | - | - | 3.6 | 1.6 | -1.93 | 152.4 | 80.7 | 3.72 | 6.9 | 692 |
| 10 | Li₂FeP₂O₇ only | 80 | 3 | 350 | 2 | - | - | - | - | 3.7 | 1.7 | -1.86 | 150.5 | 79.7 | 3.70 | 12.1 | 399 |
| 11 | LiFePO₄ only | 80 | 3 | - | - | - | - | - | - | 3.4 | 1.4 | -1.93 | 153.3 | 81.2 | 3.74 | 4.5 | 532 |

It can be seen from Table 4 that during the preparation of lithium iron pyrophosphate by the method in this application, adjustment of the drying temperature/time and sintering temperature/time during the preparation can improve the performance of the resulting material, thereby improving the battery performance. It can be seen from the Comparative Examples 8 to 11 that during the preparation of lithium iron pyrophosphate, when the drying temperature is below 100°C or the temperature in the sintering step is below 400°C, the Li₂FeP₂O₇ desired to be prepared by this application cannot be obtained, thereby failing to improve the material performance and the performance of the battery containing the resulting material.

**Table 5 Performance test results of Examples 5-1 to 5-34**

| Exampl e number | Sec ond coat ing laye r | Propo rtion of dopin g eleme nt in secon d coatin g layer | Latt ice cha nge rate (%) | Li/Mn anti-site defect concent ration (%) | Dissol ving-out amoun ts of Fe and Mn after cyclin g (ppm) | Surf ace oxy gen vale nce | Butt on batte ry gram capa city at 0.1C (mA h/g) | Rati o of 3C cons tant curre nt char ge (%) | Aver age disch arge volta ge of butto n batter y (V) | Cell swel ling rate after 30 days of stora ge at 60°C (%) | Number of cycles correspo nding to 80% capacity retention rate at 45°C | Comp acted densit y (g/cm³ ) |
|---|---|---|---|---|---|---|---|---|---|---|---|---|
| Compa rative Exampl e 12 | 1% carb on | 0 | 6.6 | 1.2 | 63 | - 1.97 | 148.9 | 71.3 | 3.75 | 6.4 | 804 | 2.43 |
| Exampl e 5-1 | 1% carb on | 0.5% N | 6.6 | 1.2 | 68 | - 1.97 | 147. 8 | 74.5 | 3.75 | 6.2 | 803 | 2.43 |
| Exampl e 5-2 | 1% carb on | 1%N | 6.6 | 1.2 | 63 | - 1.97 | 152. 4 | 77.1 | 3.76 | 6.4 | 802 | 2.43 |
| Exampl e 5-3 | 1% carb on | 15% N | 6.6 | 1.2 | 61 | - 1.97 | 155. 9 | 83.0 | 3.77 | 6.5 | 801 | 2.43 |
| Exampl e 5-4 | 1% carb on | 20% N | 6.6 | 1.2 | 62 | - 1.97 | 152. 6 | 82.7 | 3.77 | 6.5 | 803 | 2.43 |
| Exampl e 5-5 | 1% carb on | 25% N | 6.6 | 1.2 | 64 | - 1.97 | 149. 5 | 80.5 | 3.76 | 6.7 | 805 | 2.43 |
| Exampl e 5-6 | 1% carb on | 35% N | 6.6 | 1.2 | 62 | - 1.97 | 147. 5 | 78.8 | 3.75 | 6.2 | 806 | 2.43 |
| Exampl e 5-7 | 1% carb on | 0.2% P | 6.6 | 1.2 | 65 | - 1.97 | 147. 4 | 73.0 | 3.75 | 6.3 | 802 | 2.43 |
| Exampl e 5-8 | 1% carb on | 0.5% P | 6.6 | 1.2 | 61 | - 1.97 | 152. 7 | 77.6 | 3.76 | 6.1 | 801 | 2.43 |
| Exampl e 5-9 | 1% carb on | 3% P | 6.6 | 1.2 | 59 | - 1.97 | 155. 3 | 82.6 | 3.78 | 6.5 | 803 | 2.43 |
| Exampl e 5-10 | 1% carb on | 5% P | 6.6 | 1.2 | 68 | - 1.97 | 155. 6 | 83.2 | 3.77 | 6.4 | 808 | 2.43 |
| Exampl e 5-11 | 1% carb on | 8% P | 6.6 | 1.2 | 65 | - 1.97 | 152. 9 | 83.4 | 3.77 | 6.8 | 802 | 2.43 |
| Exampl e 5-12 | 1% carb on | 12% P | 6.6 | 1.2 | 69 | - 1.97 | 149. 7 | 80.3 | 3.76 | 6.1 | 801 | 2.43 |
| Exampl e 5-13 | 1% carb on | 20% P | 6.6 | 1.2 | 64 | - 1.97 | 147. 3 | 78.3 | 3.75 | 6.5 | 802 | 2.43 |
| Exampl e 5-14 | 1% carb on | 0.5% S | 6.6 | 1.2 | 62 | - 1.97 | 147. 3 | 73.1 | 3.75 | 6.7 | 805 | 2.43 |
| Exampl e 5-15 | 1% carb on | 1%S | 6.6 | 1.2 | 68 | - 1.97 | 152. 8 | 77.0 | 3.76 | 6.3 | 806 | 2.43 |
| Exampl e5-16 | 1% carb on | 8% S | 6.6 | 1.2 | 64 | - 1.97 | 155. 4 | 86.4 | 3.78 | 6.4 | 809 | 2.43 |
| Exampl e 5-17 | 1% carb on | 15% S | 6.6 | 1.2 | 67 | - 1.97 | 154. 5 | 83.2 | 3.77 | 6.2 | 803 | 2.43 |
| Exampl e5-18 | 1% carb on | 20% S | 6.6 | 1.2 | 64 | - 1.97 | 152. 6 | 83.2 | 3.77 | 6.2 | 807 | 2.43 |
| Exampl e5-19 | 1% carb on | 25% S | 6.6 | 1.2 | 67 | - 1.97 | 149. 4 | 81.0 | 3.76 | 6.8 | 808 | 2.43 |
| Exampl e 5-20 | 1% carb on | 35% S | 6.6 | 1.2 | 62 | - 1.97 | 147. 6 | 78.4 | 3.75 | 6.4 | 805 | 2.43 |
| Exampl e 5-21 | 1% carb on | 0.2% B | 6.6 | 1.2 | 64 | - 1.97 | 147. 6 | 72.4 | 3.75 | 6.5 | 806 | 2.43 |
| Exampl e 5-22 | 1% carb on | 0.5% B | 6.6 | 1.2 | 62 | - 1.97 | 152. 8 | 77.5 | 3.76 | 6.6 | 807 | 2.43 |
| Exampl e 5-23 | 1% carb on | 3% B | 6.6 | 1.2 | 63 | - 1.97 | 155. 8 | 86.4 | 3.78 | 6.6 | 805 | 2.43 |
| Exampl e 5-24 | 1% carb on | 5% B | 6.6 | 1.2 | 69 | - 1.97 | 153. 6 | 84.6 | 3.77 | 6.3 | 805 | 2.43 |
| Exampl e 5-25 | 1% carb on | 8% B | 6.6 | 1.2 | 67 | - 1.97 | 152. 7 | 83.4 | 3.77 | 6.9 | 803 | 2.43 |
| Exampl e 5-26 | 1% carb on | 12% B | 6.6 | 1.2 | 63 | - 1.97 | 149. 8 | 80.9 | 3.76 | 6.5 | 807 | 2.43 |
| Exampl e 5-27 | 1% carb on | 20% B | 6.6 | 1.2 | 61 | - 1.97 | 147. 3 | 78.4 | 3.75 | 6.4 | 806 | 2.43 |
| Exampl e 5-28 | 1% carb on | 0.2% F | 6.6 | 1.2 | 68 | - 1.97 | 147. 6 | 72.7 | 3.75 | 6.2 | 807 | 2.43 |
| Exampl e 5-29 | 1% carb on | 0.5% F | 6.6 | 1.2 | 64 | - 1.97 | 152. 8 | 76.8 | 3.76 | 6.8 | 806 | 2.43 |
| Exampl e 5-30 | 1% carb on | 3%F | 6.6 | 1.2 | 68 | - 1.97 | 1555.8 | 86.7 | 3.78 | 6.4 | 807 | 2.43 |
| Exampl e 5-31 | 1% carb on | 5%F | 6.6 | 1.2 | 62 | - 1.97 | 153. 1 | 83.4 | 3.77 | 6.7 | 806 | 2.43 |
| Exampl e 5-32 | 1% carb on | 8%F | 6.6 | 1.2 | 67 | - 1.97 | 152. 7 | 83.0 | 3.77 | 6.2 | 809 | 2.43 |
| Exampl e 5-33 | 1% carb on | 12% F | 6.6 | 1.2 | 69 | - 1.97 | 149. 8 | 80.9 | 3.76 | 6.1 | 801 | 2.43 |
| Exampl e 5-34 | 1% carb on | 20% F | 6.6 | 1.2 | 61 | - 1.97 | 147. 3 | 78.4 | 3.75 | 6.5 | 803 | 2.43 |

It can be seen from Table 5 that the doping element in the carbon layer being N, P, S, B, or F can increase the reversible specific capacity and 3C constant current ratio of the material, and the average discharge voltage of the button battery. For example, as compared with Comparative Example 12, Example 5-9 has an increase in both the 0.1C gram capacity and average discharge voltage of the button battery. Adjusting the proportion of the doping element in the carbon layer can further increase the reversible specific capacity and 3C constant current ratio of the material, and the average discharge voltage of the button battery. For example, when the doping proportion of N varies from 0% to 30%, the 0.1C gram capacity and average discharge voltage of the button battery increase first and then decrease.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A positive electrode active material having a core-shell structure, wherein the positive electrode active material comprises a core and a shell enveloping the core;
the core containing Li₁₊ₓMn_{1-y}A_{y}P_{1-z}R_{z}O₄, wherein x = -0.100 to 0.100, y = 0.001 to 0.500, z = 0.001 to 0.100, A is one or more selected from a group consisting of Zn, Al, Na, K, Mg, Mo, W, Ti, V, Zr, Fe, Ni, Co, Ga, Sn, Sb, Nb, and Ge, and optionally is one or more from a group consisting of Fe, Ti, V, Ni, Co, and Mg, and R is one or more selected from a group consisting of B, Si, N, and S; and
the shell comprising a first coating layer enveloping the core and a second coating layer enveloping the first coating layer, wherein
the first coating layer comprises a pyrophosphate MP₂O₇ and a phosphate XPO₄, wherein M and X each are one or more independently selected from a group consisting of Li, Fe, Ni, Mg, Co, Cu, Zn, Ti, Ag, Zr, Nb, and Al; and
the second coating layer is a doped carbon layer, wherein a doping element in the doped carbon layer comprises any one or more selected from a group consisting of nitrogen, phosphorus, sulfur, boron, and fluorine.

2. The positive electrode active material according to claim 1, wherein based on a weight of the core, an application amount of the doped carbon layer is greater than 0wt% and less than or equal to 6wt%, and optionally from 3wt% to 5wt%.

3. The positive electrode active material according to claim 1 or 2, wherein a mass percentage of the doping element in the doped carbon layer is below 30%, and optionally a mass percentage of the doping element in the doped carbon layer is below 20%.

4. The positive electrode active material according to any one of claims 1 to 3, wherein
the doping element is element nitrogen or element sulfur, and the mass percentage of the doping element in the doped carbon layer ranges from 1% to 15%; or
optionally, the doping element is element phosphorus, element boron, or element fluorine, and the mass percentage of the doping element in the doped carbon layer is 0.5%-5%; and
optionally, the doping element is nitrogen, phosphorus, sulfur, boron, or fluorine.

5. The positive electrode active material according to any one of claims 1 to 4, wherein the phosphate in the first coating layer has an interplanar spacing of 0.345 nm to 0.358 nm and an included angle of 24.25° to 26.45° in the (111) crystal orientation, and the pyrophosphate in the first coating layer has an interplanar spacing of 0.293 nm to 0.326 nm and an included angle of 26.41° to 32.57° in the (111) crystal orientation.

6. The positive electrode active material according to any one of claims 1 to 5, wherein
a ratio of y to 1-y in the core ranges from 1:10 to 10:1, and optionally from 1:4 to 1:1.

7. The positive electrode active material according to any one of claims 1 to 6, wherein
a ratio of z to 1-z in the core ranges from 1:9 to 1:999, and optionally from 1:499 to 1:249.

8. The positive electrode active material according to any one of claims 1 to 7, wherein
based on the weight of the core, an application amount of the first coating layer is greater than 0wt% and less than or equal to 7wt%, and optionally ranging from 4wt% to 5.6wt%.

9. The positive electrode active material according to any one of claims 1 to 8, wherein
a weight ratio of the pyrophosphate to the phosphate in the first coating layer ranges from 1:3 to 3:1, and optionally from 1:3 to 1:1.

10. The positive electrode active material according to any one of claims 1 to 9, wherein
a crystallinity of the pyrophosphate and a crystallinity of the phosphate each independently range from 10% to 100%, and optionally from 50% to 100%.

11. The positive electrode active material according to any one of claims 1 to 10, wherein
A is at least two selected from a group consisting of Fe, Ti, V, Ni, Co, and Mg.

12. The positive electrode active material according to any one of claims 1 to 11, wherein
a Li/Mn anti-site defect concentration of the positive electrode active material is below 4%, and optionally below 2%.

13. The positive electrode active material according to any one of claims 1 to 12, wherein
a lattice change rate of the positive electrode active material is below 6%, and optionally below 4%.

14. The positive electrode active material according to any one of claims 1 to 13, wherein
a surface oxygen valence of the positive electrode active material is below -1.88, and optionally from -1.98 to -1.88.

15. The positive electrode active material according to any one of claims 1 to 14, wherein a compacted density of the positive electrode active material under 3 tons is above 2.0 g/cm³, and optionally above 2.2 g/cm³.

16. A positive electrode plate, comprising a positive electrode current collector and a positive electrode film layer provided on at least one surface of the positive electrode current collector, wherein the positive electrode film layer comprises the positive electrode active material according to any one of claims 1 to 15; and optionally, based on a total weight of the positive electrode film layer, a percentage of the positive electrode active material in the positive electrode film layer is above 10wt%, and further optionally from 95wt% to 99.5wt%.

17. A secondary battery, comprising the positive electrode active material according to any one of claims 1 to 15 or the positive electrode plate according to claim 16.

18. A battery module, comprising a secondary battery, wherein the secondary battery is the secondary battery according to claim 17.

19. A battery pack, comprising a battery module, wherein the battery module is the battery module according to claim 18.

20. An electric apparatus, comprising a secondary battery, a battery module, or a battery pack, wherein the secondary battery is selected from the secondary battery according to claim 17, the battery module is the battery module according to claim 18, or the battery pack is the battery pack according to claim 19.
